# EUROPÄISCHE PATENTSCHRIFT

(11) **EP 1 866 223 B1**
(45) Veröffentlichungstag und Bekanntmachung des Hinweises auf die Patenterteilung: **03.06.2009**
(21) Anmeldenummer: 06708029.1
(22) Anmeldetag: 06.02.2006
(51) Int. Cl.: B65G 47/14, B65G 17/24, B29C 49/42

(54) **VORRICHTUNG UND VERFAHREN ZUM GLEICHRICHTEN VON ROHLINGEN ZUR HERSTELLUNG VON KUNSTSTOFF-BEH[LTERN DURCH BLASFORMGEBUNG**
DEVICE AND METHOD FOR ORIENTING PREFORMS USED TO PRODUCE PLASTICS CONTAINERS BY BLOW MOULDING
DISPOSITIF ET PROCEDE POUR REDRESSER DES EBAUCHES DESTINEES A PRODUIRE DES PRODUITS EN PLASTIQUE PAR SOUFFLAGE SUR MATRICE

(30) Priorität: 09.02.2005 EP 05100893
(43) Veröffentlichungstag der Anmeldung: 19.12.2007
(73) Patentinhaber: A2O AG, 8274 Tägerwilen (CH)
(72) Erfinder: KLAIBER, Franz, 78564 Wehingen (DE); NOVAK, Peter, CH-8274 Tägerwilen (CH)
(74) Vertreter: Weiss, Peter
(86) Internationale Anmeldenummer: PCT/EP2006/050682
(87) Internationale Veröffentlichungsnummer: WO 2006/084831

(56) Entgegenhaltungen:
- GB-A- 1 192 907
- US-A- 3 272 310
- US-A- 4 846 663

## Beschreibung

Die Erfindung betrifft eine Vorrichtung und ein Verfahren zum Gleichrichten von Rohlingen zur Herstellung von Kunststoff-Behältern durch Blasformgebung mit den Merkmalen des Oberbegriffs der Ansprüche 1 und 20. Ein bevorzugtes Anwendungsgebiet der vorliegenden Erfindung sind Rohlinge zur Herstellung von PET-Flaschen. Solche Rohlinge weisen einen umlaufenden Kragen (Neckring) als Profilkontur auf.

Die vorliegende Erfindung würde sich grundsätzlich aber auch für jede Art von länglichen Gegenständen mit einer Profilkontur eignen. Ein länglicher Gegenstand mit einer Profilkontur ist ein (einstückiger oder mehrteiliger) Körper, der in Bezug auf seine Achse lang gestreckt ist. Unter einer Profilkontur wird dabei eine Abstufung des Gegenstands im Längsschnitt entlang seiner Achse verstanden, wodurch ein Anschlag in Bezug auf die Achsrichtung entsteht.

Eine gattungsmässig vergleichbare Vorrichtung zum Gleichrichten von PET-Rohlingen (Preforms) beschreibt beispielsweise die WO 2004/069700. Diese Vorrichtung weist gegenläufig rotierende etwa horizontal angeordnete Scheiben auf, wobei im äusseren Randbereich einer der Scheiben (nach unten offene) Aufnahmen für einzelne Rohlinge vorgesehen sind. Unterhalb dieser Scheibe ist eine feststehende Scheibe vorgesehen, die in einem Umfangsabschnitt eine ringstückförmige Aussparung für die Rohlinge aufweist. Die in der Aufnahme liegend gehaltenen und in Umfangsrichtung ausgerichteten Rohlinge werden durch die Drehbewegung der Scheibe der Aussparung zugeführt. Hier werden die Rohlinge in einem ersten Umfangsabschnitt der Aussparung derart an ihrem Kragen erfasst, dass die Rohlinge in hängender Position etwa vertikal ausgerichtet sind. Der daran anschliessende zweite Abschnitt der Aussparung weist eine grössere Breite auf, wodurch die Rohlinge durch die Aussparung fallen, wo sie von einer Führungsschiene übernommen werden, welche die Rohlinge schräg nach unten gleitend weiter transportiert. Durch die Positionierung der Rohlinge in der Aufnahme in Umfangsrichtung ist die Leistungsfähigkeit dieser Gleichricht-Vorrichtung verhältnismässig gering.

Die US 3 272 310 zeigt eine Vorrichtung zum Gleichrichten von Ampullen. Die Vorrichtung weist einen konisch ausgebildeten Drehtisch auf, in dessen Umfangsbereich ein Leitelement angeordnet ist. Das Leitelement bildet zur Oberseite des Drehtisches einen Spalt, durch welchen der Ampullenhals durchführbar ist. Somit können Ampullen entlang des Leitelements in radialer Lage bewegt und schliesslich vom Drehtisch abgeführt werden. Falsch liegende Ampullen werden mit Hilfe einer kurzen spiralförmigen Schikane abgelenkt und unter Einwirkung der Zentrifugalkraft wieder gegen das Leitelement geschleudert. Eine solche Schikanenanordnung kann verschiedene Nachteile haben. So können nochmalig gegen das Leitelement geschleuderte Ampullen beschädigt werden. Da die Ampullen jeweils in Längsorientierung der Schikane entlang gleiten, fallen diese mehr oder weniger ungeordnet beim Leitelement an, was sich negativ auf den Wirkungsgrad des Gleichricht-Prozesses auswirkt. Weiter haben Tests mit PET-Rohlingen gezeigt, dass solche Rohlinge insbesondere sperriger in der Handhabung als Ampullen sind und deshalb eine Anordnung gemäss US 3 272 310 für diesen Anwendungsbereich ungeeignet wäre. Insbesondere könnten sich nicht korrekt erfasste Rohlinge an der Schikane verkeilen und so Maschinenstillstände auslösen.

Die US 3 272 310 offenbart die Merkmale des Oberbegriffs der Ansprüche 1 und 20.

Es ist deshalb eine Aufgabe der vorliegenden Erfindung, die Nachteile des Bekannten zu vermeiden, insbesondere eine Vorrichtung und ein Verfahren der eingangs genannten Art zu schaffen, die sich durch eine hohe Leistungsfähigkeit und Kapazität auszeichnen. Weiter soll die Vorrichtung eine hohe Prozesssicherheit gewährleisten. Sodann soll sich die Vorrichtung durch einen geringen Platzbedarf auszeichnen.

Erfindungsgemäss werden diese Aufgaben mit einer Vorrichtung mit den Merkmalen von Anspruch 1 gelöst.

Eine Vorrichtung zum Gleichrichten von Rohlingen zur Herstellung von Kunststoffbehältern durch Blasformgebung mit einem Kragen (Neckring) als Profilkontur (nachfolgend kurz "Rohlinge") weist einen um eine Rotationsachse drehbaren Drehtisch zur Aufnahme der ungeordneten Rohlinge auf. Diese Rohlinge können über eine Förder- und Zuführeinrichtung vorzugsweise von oben fallend etwa mittig auf den drehenden Drehtisch aufgegeben werden. Die erfindungsgemässe Vorrichtung zeichnet sich dadurch aus, dass in einem Umfangsabschnitt über dem Drehtisch ein Leitelement derart angeordnet ist, dass zwischen der Oberseite des Drehtisches und dem Leitelement ein Spalt zum Erfassen der Rohlinge an ihrem Kragen und zum Bewegen der Rohlinge in Drehrichtung des Drehtisches entlang des Leitelements gebildet ist, wobei der sich an die Profilkontur anschliessende Grundkörper radial nach aussen durch den Spalt durchführbar ist. Der Grundkörper des Rohlings ist damit radial nach aussen durch den Spalt geführt, während der Kragen zusammen mit einem Kopfabschnitt bezogen auf das Leitelement radial nach innen gerichtet ist. Selbstverständlich könnte sich die Vorrichtung beispielsweise insbesondere auch für Schrauben mit einem Schraubenkopf (als Profilkontur) und einem an diesem anschliessenden Gewindeabschnitt als Grundkörper eignen. Die Vorrichtung besteht aus wenigen Einzelkomponenten und lässt sich mit verhältnismässig geringem Materialaufwand herstellen. Zum Trennen von vom Leitelement korrekt erfassten Rohlingen, die über einen Abführabschnitt des Leitelements vom Drehtisch abführbar sind, von nicht-korrekt erfassten Rohlingen, ist eine Weichenstelle vorgesehen. An der Weichenstelle ist dazu ein zum Leitelement nach innen versetztes Weichenleitelement angeordnet, das ebenfalls einen Spalt zur Oberseite des Drehtisches definiert, an welchem die nicht-korrekt erfassten Rohlinge vom Weichenleitelement erfassbar und diese so auf eine weitere Umdrehung rückgeführt werden können. Da das Weichenleitelement vorzugsweise auf gleiche Weise wie das Leitelements ausgebildet ist, kann folglich also auch das Weichenleitelement die Rohlinge an ihrem Kragen erfassen, wobei der sich an den Kragen anschliessende Abschnitt des Rohlings radial nach aussen durch den Spalt durchführbar ist. Eine derartige Weichenanordnung hat den Vorteil, dass eine hohe Prozesssicherheit erreicht wird. Nicht-korrekt erfasste Rohlinge können Rohlinge sein, deren Kragen nicht am Leitelement anliegt und/oder die nicht radial ausgerichtet sind. Nicht-korrekt erfasste Rohlinge können beispielsweise auch sogenannte "Stecklinge" sein, bei welchen ein Rohling teilweise in eine Öffnung eines anderen Rohlings eingesteckt ist.

Vorteilhaft kann es sein, wenn zum Überführen von Rohlingen vom Weichenleitelement auf das Leitelement das Weichenleitelement unmittelbar in das Leitelement übergeht. Somit kann ein vom Spalt des Weichenleitelements erfasster Gegenstand übergangslos in den Spalt des Leitelements geführt werden. Selbstverständlich wäre es auch denkbar, das Weichenleitelement derart separat auszuführen, dass dessen der Weichenstelle abgewandtes Ende freiliegt.

Vorteilhaft kann es sein, wenn das Leitelement und das Weichenleitelement durch ein gemeinsames einteiliges oder mehrteiliges Leitprofil gebildet ist, wobei das eine Ende des Leitprofils die Weichenstelle definiert. Das Leitprofil kann zur Herstellung der Weichenstelle das Weichenleitelement überlappen.

Das Leitelement und das Weichenleitelement kann wenigstens teilweise entlang des Abführabschnitts in einem zur Profilkontur der Rohlinge korrespondierenden Abstand zueinander angeordnet sein. Auf diese Art und Weise kann eine vorteilhafte Abführöffnung für vom Leitelement korrekt erfasste Rohlinge gebildet werden, wodurch die Rohlinge über ihren Kragen nahezu spielfrei zwischen Leitelement und Weichenleitelement führbar sind.

Zusätzlich oder eventuell auch alternativ kann die Führung der Rohlinge dadurch verbessert werden, dass auf der Oberseite des Drehtisches eine durch eine Abstufung gebildete, kreisförmige Führungsschulter vorgesehen ist, die im Bereich der Weichenstelle einen Anschlag für den Kragen der Rohlinge bildet.

Wegen des Kragens können die Rohlinge eine leichte Schiefstellung zur Horizontalen einnehmen, d.h. die Längsachse des Rohlings kann in einem spitzen Winkel zur Oberseite des Drehtisches verlaufen. Diese Schiefstellung kann insbesondere bei Rohlingen mit einem konischen Grundkörperabschnitt verhältnismässig stark ausgeprägt sein. Eine Schiefstellung kann an der Weichenstelle dazu führen, dass der Rohling erhöhten Kräften ausgesetzt ist und sogar verkeilen könnte. Um an der Weichenstelle eine Einführhilfe insbesondere für die korrekt erfassten Rohlinge zu schaffen, kann im Bereich der Weichenstelle zum Erzielen einer etwa waagrechten Lage der Rohlinge ein Anhebemittel zum Anheben der Grundkörper und/oder ein Fang- und Niederhaltemittel zum Fangen und Niederhalten der Kopfabschnitte und/oder zum Ausrichten der Rohlinge in eine etwa exakte radiale Lage angeordnet sein. Die etwa waagrechte Lage stellt sicher, dass beim Durchlaufen der Weichenstelle kein Verkeilen der Rohlinge erfolgen kann. Das Anhebemittel kann insbesondere deshalb erforderlich sein, weil - ohne Fang- bzw. Niederhaltemittel - beim Anheben die Rohlinge sich verschieben oder schräg stellen könnten. Mit Hilfe des Fang- und Niederhaltemittels kann so durch Ausrichten eine etwa exakte radiale Lage hergestellt bzw. aufrechterhalten werden. Ersichtlicherweise bewirkt das Fang- und Niederhaltemittel nicht nur eine radiale Führung, sondern auch eine vertikale Begrenzung und Führung der Kopfabschnitte. Die Austragungsrate und die Prozesssicherheit wird somit wesentlich erhöht.

In einer vorteilhaften Ausführungsform kann der Drehtisch durch eine kreisförmige Scheibe gebildet sein, wobei die Oberseite plan ist. Eine plane Oberseite hat insbesondere im Zusammenhang mit Stopp- und Anfahrvorgängen des Drehtisches erhebliche Vorteile. Die Oberseite des Drehtisches verläuft dabei selbstverständlich vorteilhaft senkrecht zu dessen Rotationsachse, wobei dieser bevorzugt horizontal ausgerichtet ist. Die vorliegende Anordnung ermöglicht eine optimale Ausnutzung der Zentrifugalkraft. Beim Stopp können sich die Rohlinge auf der Oberseite der Scheibe frei verteilen, wodurch Störungen des Austragungsbereichs beim Anfahren vermeidbar sind. Selbstverständlich wäre aber auch eine konkave oder konvexe Ausgestaltung der Scheibenoberseite denkbar. Für die Drehung des Drehtisches kann unterhalb des Drehtisches in der Rotationsachse ein Getriebe angeordnet sein. Der Antrieb kann über einen Elektromotor erfolgen.

In einer Ausführungsform kann das Leitelement in der Draufsicht wenigstens teilweise etwa kreisförmig ausgestaltet sein. Somit können die vom Leitelement erfassten Rohlinge in einer Kreisbahn um die Rotationsachse entlang des Leitelements bewegt werden. Diese Anordnung gewährleistet eine optimale Ausnutzung der Drehbewegung des Drehtisches.

In einer alternativen Ausführungsform ist das Leitelement in der Draufsicht spiralförmig ausgestaltet. Ein Vorteil dieser Anordnung besteht darin, dass ein verhältnismässig langer Weg geschaffen wird, auf welchem die Rohlinge zum Gleichrichten orientiert werden können. In der Praxis hat sich gezeigt, dass diese Anordnung auch für Schrauben geeignet wäre. Eine spiralförmige Anordnung kann auch deshalb vorteilhaft sein, weil auf eine Weichenstelle (bzw. auf ein Weichenleitelement) verzichtet werden könnte.

Vorteilhaft ist es, wenn das Leitelement den Rand des Drehtisches wenigstens teilweise begrenzt. Besonders vorteilhaft ist es, wenn das Leitelement den Rand des Drehtisches ganz begrenzt bzw. in Umfangsrichtung geschlossen ist. Auf diese Weise könnte die gesamte Oberfläche des Drehtisches zum Gleichrichten der Rohlinge genutzt werden.

Das Leitelement kann ein Leitprofil, beispielsweise ein Leitblech sein. Ein Vorteil dieser Konstruktion besteht insbesondere darin, dass durch den Abstand zwischen Drehtisch und Leitblech auf einfache Art und Weise ein Spalt für die Rohlinge definiert wird. Das bevorzugt feststehende Leitblech kann achsparallel zur Rotationsachse des Drehtisches verlaufen. Ein solches Leitblech kann aus Stahl oder Aluminium bestehen. Eine solche Anordnung lässt sich verhältnismässig einfach und kostengünstig herstellen. Bei empfindlichen Rohlingen ist es vorstellbar, das Leitblech durch einen Schutzüberzug (beispielsweise aus einem elastischen Material wie Gummi) zu versehen. Selbstverständlich ist es denkbar, das Leitprofil aus Kunststoff oder einem Faserverbundwerkstoff herzustellen.

Ausgehend von im wesentlichen zylindrischen Rohlingen mit einem Kragen und einem daran anschliessenden Grundkörper, wobei dieser radial nach aussen durch den Spalt des Leitelements durchführbar sein soll, kann der Spalt wie folgt ausgebildet sein: die Höhe des Spalts liegt zwischen dem Durchmesser des Kragens und dem Durchmesser des Grundkörpers und entspricht bevorzugt dem Durchmesser des Grundkörpers zuzüglich der Hälfte der Differenz gebildet durch den Durchmesser des Kragens und dem Durchmesser des Grundkörpers. Eine solche Anordnung gewährleistet ein einfaches Erfassen der Rohlinge durch das Leitelement. Sodann können die Rohlinge in einer rollenden Relativbewegung entlang des Spalts bzw. Leitelements bewegt werden, womit die Rohlinge kaum Vibrationen und Schlägen ausgesetzt sind.

Gemäss einer weiteren Ausführungsform kann zum Kanalisieren der Rohlinge auf dem Drehtisch wenigstens ein Zusatzelement vorgesehen sein, welches in Bezug auf das Leitelement nach innen versetzt, insbesondere konzentrisch angeordnet ist, wobei das Zusatzelement in einem Umfangsabschnitt eine Freistellung, insbesondere eine Aussparung zum Durchlassen der Rohlinge radial nach aussen aufweist. Das Zusatzelement kann in der Draufsicht etwa kreisförmig ausgestaltet sein. Das Zusatzelement kann aus einem Blech gebildet werden. Das Zusatzelement kann einen geschlossenen Kreis bilden, wobei auf einem Umfangs- bzw. Kreisabschnitt eine Aussparung zum Durchführen der Rohlinge vorgesehen ist. Selbstverständlich könnte der Kreis auch durch eine Freistellung unterbrochen sein. Die Freistellung liesse sich damit auf besonders einfache Art und Weise mit einem Blech herstellen. Diese Ausführungsform eignet sich grundsätzlich auch für konventionelle Vorrichtungen mit einem Leitelement (d.h. ohne Weichenstelle bzw. Weichenleitelement).

Zusätzlich können die Rohlinge mit Hilfe des Zusatzelements vororientiert werden. Dazu kann zwischen dem Drehtisch und dem Zusatzelement ein Spalt zum Erfassen des Rohlings an seinem Kragen und zum Bewegen des Rohlings entlang des Zusatzelements vorgesehen sein. Das Zusatzelement kann auf gleiche Art und Weise wie das vorgängig genannte Leitelement ausgestaltet sein. Analog zum Leitelement ist also ein an den Kragen anschliessender Grundkörper radial nach aussen durch den Spalt des Zusatzelements durchführbar. Die Ausgestaltung des Zusatzelements unterscheidet sich in prinzipieller Hinsicht vom Leitelement im Wesentlichen nur dadurch, dass die vorgängig genannte Freistellung zum Durchlassen der Rohlinge radial nach aussen vorgesehen sein muss. Die Anordnung hat den Vorteil, dass durch die Vororientierung die Leistungsfähigkeit und Kapazität der Vorrichtung wesentlich erhöht werden kann. Dies gilt insbesondere auch für konventionelle Vorrichtungen.

Zum Überführen der Rohlinge von der radialen Lage in eine hängende Lage kann ein zweites Leitelement vorgesehen sein, das einen Spalt zum Rand des Drehtisches bildet. Mit Hilfe einer derartigen Anordnung kann auch der Rand des Drehtisches zur Bewegung der Rohlinge genutzt werden.

Besonders vorteilhaft kann es sein, wenn der Spalt zwischen dem Rand des Drehtisches und dem zweiten Leitelement derart ausgestaltet ist, dass der an den Kragen anschliessende Grundkörper der Rohlinge in einem entsprechenden Umfangsabschnitt etwa senkrecht durch den Spalt durchführbar ist. Beispielsweise kann dazu zwischen Leitelement und Transportschiene also ein zweites Leitelement vorgesehen sein, welches den Aussenumfang des Drehtisches randseitig begrenzt. Dieses Schienenelement bildet somit zum Drehtisch (bzw. der Scheibe) einen Spalt zur Aufnahme der Rohlinge, wodurch die Rohlinge entlang des Aussenumfangs des Drehtisches in etwa hängender Position bewegt werden können. An dieses Schienenelement kann eines der Schienenelemente der Transportschiene zum hängenden Weitertransport der Rohlinge anschliessen.

Der Rand des Drehtisches kann zur Bildung einer vorteilhaften Abroll- und/oder Anschlagfläche für die Rohlinge in senkrecht hängender Lage durch eine vertikal zur Oberseite verlaufende Stirnseite gebildet sein.

Vorteilhaft kann es sein, wenn das Leitelement in eine Transportschiene enthaltend zwei in einem Abstand zueinander angeordnete parallele Schienenelemente übergeht, welche einen Spalt zum hängenden Transportieren der Rohlinge zwischen den Schienenelementen bilden. Der Spalt zwischen den Schienenelementen schliesst sich dabei an den Spalt zwischen Drehtisch und Leitelement an. Besonders bevorzugt verläuft dabei das Leitelement tangential zur Transportschiene oder Transportstrecke.

Besonders vorteilhaft kann es sein, wenn das zweite Leitelement bzw. das äussere Schienenelement unmittelbar an das Leitelement anschliesst. Dadurch ist ein optimaler Übergang und Pufferspeicher zwischen dem ersten und dem zweiten Leitelement geschaffen.

Vorteilhaft kann es sein, wenn eine antreibbare Transportvorrichtung zum Weitertransport der durch den Drehtisch und das Leitelement gleichgerichteten Rohlinge vorgesehen ist. Diese Transportvorrichtung kann alternativ zum vorgängig genannten Transportsystem mit der Transportschiene vorgesehen sein. Denkbar ist auch eine Kombination dieser zwei Transportsysteme. Eine antreibbare Transportvorrichtung hat den Vorteil, dass die gleichgerichteten Rohlinge unter Beibehaltung ihrer Orientierung im Wesentlichen in alle Raumachsen transportierbar sind. Ein Vorteil dieser Ausführungsform besteht somit darin, dass der Drehtisch nicht in einer erhöhten Position beispielsweise in Bezug auf eine Blaseinrichtung für PET-Flaschen angeordnet sein muss. Eine solche Transportvorrichtung eignet sich auch in Kombination mit konventionellen Vorrichtungen zum Gleichrichten von länglichen, vorzugsweise zylindrischen Gegenständen mit einer Profilkontur, beispielsweise von Rohlingen für PET-Flaschen. Die Transportvorrichtung könnte auch für sich allein Gegenstand einer Erfindung sein. Eine Kombination mit einer Vorrichtung zum Gleichrichten von Rohlingen ist nicht zwingend erforderlich.

Die Transportvorrichtung kann eine feststehende Führungsschiene und eine Mehrzahl von entlang der Führungsschiene in Transportrichtung bewegbaren und in einer Reihe angeordneten Rollen aufweisen. Die Rollen haben Rollenachsen, die jeweils etwa rechtwinklig zur Transportrichtung verlaufen können. Die Rollen sind derart von der Führungsschiene beabstandet, dass jeweils zwischen zwei Rollen und der Führungsschiene ein Gegenstand positionierbar ist. Die Gegenstände sind dadurch während des Transportvorgangs achsparallel zu den Rollenachsen der Rollen bzw. rechtwinklig zur Transportrichtung ausgerichtet. Vorteil einer derartigen Transportvorrichtung ist insbesondere, dass auf einfache Art und Weise eine Aufwärtsbewegung der Gegenstände ermöglicht wird. Eine solche Transportvorrichtung kann weiter automatisiert gefahren werden. Sodann ist durch die spezielle Lagerung der Gegenstände jeweils zwischen zwei Rollen und der Führungsschiene ein Verkeilen von Gegenständen miteinander ausgeschlossen. Anstatt der Rollen sind auch anderer Wälzkörper aber auch Gleitkörper, insbesondere nicht rotierende Gleitmitnehmer vorstellbar. Zum geordneten Bereitstellen der Rohlinge für die Transportvorrichtung kann ein drehbar gelagertes Eintaktrad vorgesehen werden, das vorteilhaft im Bereich des Übergangsbereichs des Leitelements zur Transportvorrichtung angeordnet ist. Mit Hilfe des Eintaktrads können die Rohlinge voneinander beabstandet und so der Transportvorrichtung auf vorteilhafte Weise übergeben werden. Ein Verklemmen der Rohlinge in der Transportvorrichtung kann so vermieden werde. Das Eintaktrad kann beispielsweise über einen Schrittmotor antreibbar sein, wodurch die taktweise Übergabe an die Transportvorrichtung besonders günstig erfolgen könnte. Ein solches Eintaktrad weist in seinem Umfangsbereich vorzugsweise gleichmässig über den Umfang verteilte Aussparungen zur Aufnahme eines Rohlings auf. Selbstverständlich sind statt eines Eintaktrads auch andere Taktsysteme vorstellbar.

Besonders vorteilhaft ist es, wenn die Führungsschiene der Transportvorrichtung eine Führungsnut und/oder die Rollen jeweils im Bereich des Rollenumfangs eine umlaufende Nut aufweisen, wobei die Führungsnut der Führungsschiene bzw. die umlaufende Nut zum formschlüssigen Erfassen der Profilkontur der Rohlinge ausgebildet ist. Beispielsweise können diese Nuten zum Kragen der Rohlinge korrespondieren. Auf diese Weise ist eine präzise und sichere Führung der Gegenstände gewährleistet.

Zum Bewegen der Rollen der Transportvorrichtung in Transportrichtung können Zugmittel vorgesehen sein. Zugmittel können eine Kette oder einen Zahnriemen enthalten. Besonders bevorzugt ist die Kette eine Rollen- bzw. Hülsenkette oder eine 3-D Kette, allenfalls auch eine Zahnkette. Zugmittel haben den Vorteil, dass die Transportvorrichtung vielfältig einsetzbar ist. Insbesondere ist eine Aufwärtsbewegung der Gegenstände kein Problem.

Sofern das Zugmittel eine Kette mit einer Mehrzahl von Kettenelementen ist, wobei zwei Kettenelemente jeweils gelenkig miteinander verbunden sind, dann ist es besonders vorteilhaft, wenn die Rollen auf verlängerten Gelenkachsen angeordnet sind. Auf diese Art und Weise lassen sich die Rollen besonders einfach mit den Ketten verbinden. Würden statt der Rollen Gleitkörper verwendet, so könnte man diese starr mit der Kette verbinden.

Eine parallel zur Führungsschiene verlaufende Rollenführung kann die Rollen abstützen. Somit können die Rollen auf einfache Art und Weise rollend entlang der Rollenführung geführt werden.

Eine Kombination der Transportvorrichtung mit der vorgängig beschriebenen Vorrichtung zum Gleichrichten von länglichen, vorzugsweise zylindrischen Gegenständen mit einer Profilkontur ist nicht zwingend erforderlich. Ein weiterer Aspekt der Erfindung besteht somit darin, dass die vorgängig genannte Transportvorrichtung zum Transport von länglichen, vorzugsweise zylindrischen Gegenständen mit einer Profilkontur auch in Kombination mit konventionellen Gleichricht-Vorrichtungen vorteilhaft sein kann.

Die Transportvorrichtung zum Transport von länglichen, vorzugsweise zylindrischen Gegenständen mit einer Profilkontur, weist eine feststehende Führungsschiene und eine Mehrzahl von entlang der Führungsschiene in Transportrichtung bewegbaren, in einer Reihe angeordneten Wälzkörper auf, wobei die Wälzkörper derart von der Führungsschiene beabstandet sind, dass jeweils zwischen zwei Wälzkörpern und der Führungsschiene ein Gegenstand erfassbar und auf der Führungsschiene abwälzbar ist. Die senkrecht zur Transportrichtung bzw. zur Führungsschiene ausgerichteten Gegenstände sind dabei bevorzugt in einer Dreipunktelagerung zwischen Wälzkörpern und Führungsschiene gehalten. Als Wälzkörper werden bevorzugt Rollen eingesetzt, die im Wesentlichen zylindrisch ausgebildet sind. Die jeweiligen Rollenachsen können dabei senkrecht zur Transportrichtung bzw. achsparallel zur Achse der länglichen Gegenstände verlaufen. Wälzkörper können selbstverständlich auch kugel- oder kegel- bzw. kegelstumpfförmig ausgebildet sein. Denkbar sind auch nicht rotierende Gleitkörper und insbesondere Gleitmitnehmer anstatt drehbarer Wälzkörper. Denkbar ist weiterhin, dass die Wälzachse der Wälzkörper und die Achse des Gegenstands schräg zueinander verlaufen können. Dies kann insbesondere auch für die Rollenachse gelten. Ein paralleler Verlauf von Wälzachsen und Achsen der Gegenstände ist nicht zwingend erforderlich.

Die Transportvorrichtung eignet sich insbesondere zum Zuführen von Rohlingen zur Herstellung von Kunststoffbehälter durch Blasformgebung, insbesondere für PET-Flaschen an eine Blaseinrichtung zum Herstellen solcher PET-Flaschen.

Die Erfindung betrifft auch ein Verfahren mit den Merkmalen von Anspruch 20. Zum Gleichrichten von ungeordnet anfallenden Rohlingen mit einem Kragen werden die Gegenstände einem um eine Rotationsachse rotierenden Drehtisch einer Zentrifugalkraft ausgesetzt. Die Rohlinge werden dann von einem im Umfangsbereich des Drehtisches angeordneten Leitelement derart am Kragen erfasst, dass ein sich an den Kragen anschliessender Grundkörper des Rohlings radial nach aussen durch einen Spalt durchgeführt wird. Die ungeordnet anfallenden Rohlinge können beispielsweise über eine Zuführeinrichtung etwa mittig bzw. im Bereich der Rotationsachse des Drehtisches aufgegeben werden. Die nicht-korrekt erfassten Rohlinge werden an der Weichenstelle ausgeschieden, wobei die ausgeschiedenen Rohlinge in radialer Lage entlang des Weichenleitelements bewegt und quasi bereits gleichgerichtet wieder dem Leitelement zugeführt werden. Durch diese Rückführung können die ausgeschiedenen Rohlinge eine weitere Drehung vollziehen.

Die Rohlinge können unter Beibehaltung der radialen Ausrichtung und unter Ausnützung der Drehbewegung des Drehtisches vorzugsweise rollend entlang dem Leitelement bewegt werden. Da die Rohlinge mit Hilfe des Spaltes entlang dem Leitelement geführt sind, kann eine Rollbewegung der Rohlinge auf einfache Art und Weise erzielt werden. Eine solche Rollbewegung soll bevorzugt mit wenig oder kein Schlupf erfolgen, wodurch die Drehbewegung des Drehtisches optimal ausgenützt wird und die Rohlinge in der Richtung der Übergangsstelle beschleunigt werden.

Zum Optimieren des Verfahrens kann es notwendig sein, dass die Rohlinge durch eine Aussparung oder eine andere Freistellung, die in einem Umfangsabschnitt des nach innen in Bezug auf das Leitelement versetzt angeordneten Zusatzelement angeordnet ist, hindurch gelassen werden. Die Rohlinge können auf einfache Art und Weise kanalisiert werden und treffen somit in einem durch die Aussparung vorbestimmten Umfangsbereich auf das Leitelement auf. Es ist besonders vorteilhaft, wenn die durch den Spalt am Leitelement durchgeführten Rohlinge vor dem Erreichen der Weichenstelle mit einem Fang- und Niederhaltemittel am Kragen gefangen und, in geführter und vorzugsweise niedergehaltener Lage der Weichenstelle zugeführt werden. Damit ist ein geordnetes Abführen der Rohlinge vom Drehtisch gewährleistet.

Ein weiterer Aspekt der Erfindung betrifft ein Verfahren zum Transportieren von länglichen, vorzugsweise zylindrischen Gegenständen mit einer Profilkontur, insbesondere von Rohlingen zur Herstellung von Kunststoffbehältern, insbesondere für PET-Flaschen, bei welchem die Gegenstände derart von einer feststehenden Führungsschiene und jeweils zwei in Transportrichtung bewegten Wälzkörpern einer Transportvorrichtung erfasst werden, dass sie jeweils in einer Dreipunktlagerung rollend zwischen der Führungsschiene und den Wälzkörpern in Transportrichtung bewegt werden. Für eine optimale Rollbewegung der Gegenstände verlaufen deren Achsen vorteilhaft senkrecht zur Transportrichtung. Die Gegenstände können dabei besonders vorteilhaft achsparallel zu den Rollenachsen der Rollen ausgerichtet sein. Werden anstatt der Wälzkörper Gleitkörper, insbesondere nichtrotierende Gleitmitnehmer verwendet, so wäre es sogar vorstellbar, dass die Rohlinge in einer reinen Schiebebewegung in Transportrichtung bewegt werden.

Die Gegenstände können mit Hilfe der Transportvorrichtung von oben nach unten bzw. aufwärts transportiert werden. Besonders bevorzugt werden die Gegenstände von einer Gleichricht-Vorrichtung einer auf einer höheren Ebene angeordneten Bearbeitungsvorrichtung zugeführt. Auf diese Weise könnten beispielsweise PET-Flaschen rationell und günstig hergestellt werden.

Wenn die Gegenstände Rohlinge zur Herstellung von Kunststoffbehältern, insbesondere für PET-Flaschen sind, ist es vorteilhaft, wenn die Rohlinge mit Hilfe der Transportvorrichtung über Kopf der Bearbeitungsvorrichtung, insbesondere einer Blaseinrichtung zum Herstellen von PET-Flaschen zugeführt werden.

Weitere Einzelmerkmale und Vorteile der Erfindung ergeben sich aus der nachfolgenden Beschreibung der Ausführungsbeispiele und aus den Zeichnungen. Es zeigen:
- Figur 1: einen Querschnitt durch einen Rohling für Kunststoffbehälter,
- Figur 2: eine Seitenansicht auf eine Schraube,
- Figur 3: eine perspektivische Darstellung einer erfindungsgemässen Vorrichtung, insbesondere zum Gleichrichten von Rohlingen gemäss Figur 1,
- Figur 4: eine perspektivische Darstellung und Teilschnitt des Ausführungsbeispiels gemäss Figur 3,
- Figur 5: eine perspektivische Darstellung eines Drehtisches mit Leit- und Zusatzelement,
- Figur 6: eine Draufsicht auf den Drehtisch gemäss Figur 5,
- Figur 7: eine perspektivische Darstellung eines Leitelements und eines Zusatzelements,
- Figur 8: eine Seitenansicht des Drehtisches gemäss Figur 5,
- Figur 9: ein Teil-Querschnitt des Drehtisches gemäss Figur 5 in der Ebene C-C,
- Figur 10: ein Teil-Querschnitt des Drehtisches gemäss Figur 5 in der Ebene E-E
- Figur 11: eine perspektivische Darstellung einer Vorrichtung zum Gleichrichten von Schrauben,
- Figur 12: eine perspektivische Darstellung einer weiteren Vorrichtung für Schrauben,
- Figur 13: eine perspektivische Darstellung einer weiteren Vorrichtung zum Gleichrichten von Rohlingen,
- Figur 14: eine Draufsicht auf die Vorrichtung gemäss Figur 13,
- Figur 15: einen Querschnitt durch die Vorrichtung gemäss Figur 13 (Schnitt E-E gemäss Figur 14),
- Figur 16: eine Detailansicht auf einen Randbereich der Vorrichtung mit einem Rohling in radialer Lage (Ausschnitt B gemäss Figur 15),
- Figur 17: einen Schnitt F-F gemäss Figur 14,
- Figur 18: einen Schnitt G-G gemäss Figur 14,
- Figur 19: einen Schnitt H-H gemäss Figur 14,
- Figur 20: einen Schnitt I-I gemäss Figur 14 mit einem Rohling in senkrechter Lage,
- Figur 21: eine Seitenansicht der Vorrichtung gemäss Figur 13 in Richtung einer Weichenstelle,
- Figur 22: eine Detailansicht des Ausschnitts C gemäss Figur 21 mit einem Anhebemittel,
- Figur 23: einen Schnitt J-J gemäss Figur 14 mit einem Rohling kurz vor einer Weichenstelle,
- Figur 24: einen Schnitt durch die Weichenstelle (Schnitt K-K gemäss Figur 14) mit einem Rohling an der Weichenstelle,
- Figur 25: einen Schnitt L-L gemäss Figur 14 mit einem Rohling kurz nach der Weichenstelle,
- Figur 26: einen Teilausschnitt einer perspektivischen Vorderansicht auf eine Vorrichtung im Bereich der Weichenstelle mit einem alternativen Anhebemittel,
- Figur 27: eine Rückansicht auf die Vorrichtung gemäss Figur 26,
- Figur 28: eine Draufsicht auf einen Randbereich der Vorrichtung mit einem weiteren alternativen Anhebemittel,
- Figur 29: eine Vorderansicht auf das Anhebemittel gemäss Figur 28,
- Figur 30: eine Ansicht eines Randbereiches der Vorrichtung gemäss einem weiteren Ausführungsbeispiel,
- Figur 31: eine alternative Ausgestaltung des Randbereichs gemäss Figur 30,
- Figur 32: eine perspektivische Darstellung einer Vorrichtung zum Gleichrichten von Rohlingen und eine Transportvorrichtung zum Weiterführen der gleichgerichteten Rohlinge,
- Figur 33: eine vergrösserte perspektivische Darstellung einer Transportvorrichtung,
- Figur 34: eine perspektivische und schematische Ansicht einer Transportvorrichtung mit einem einzelnen Rohling gemäss Ausführungsbeispiel aus Figur 1,
- Figur 35: eine Ansicht in Pfeilrichtung x der Transportvorrichtung gemäss Figur 34,
- Figur 36: ein Schnitt durch eine Transportvorrichtung gemäss winkligem Schnittverlauf (B-B) von Figur 35,
- Figur 37: eine Detailansicht (Y) von Figur 36,
- Figur 38: eine Vorderansicht einer Kette mit zwei Rollen einer Transportvorrichtung,
- Figur 39: ein Querschnitt durch die Kette und die Rollen gemäss Figur 38,
- Figur 40: eine perspektivische Darstellung des Leitelements gemäss Figur 7 mit einem Eintaktrad,
- Figur 41: eine Detailansicht des Eintaktrads gemäss Figur 40, und
- Figur 42: eine perspektivische Darstellung der Gleichricht-Vorrichtung und Transportvorrichtung gemäss Figur 32 mit einem Eintaktrad.

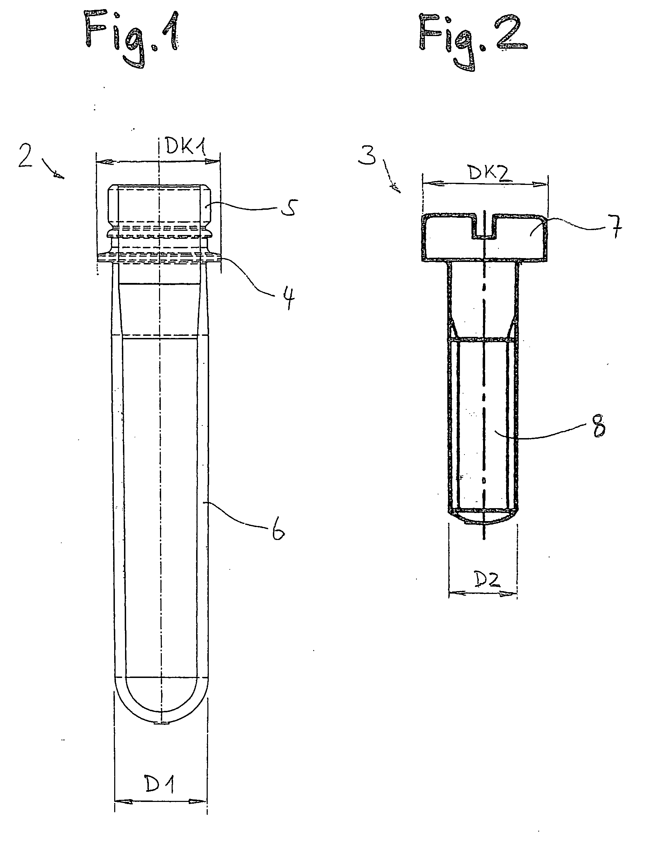

Die Figuren 1 und 2 zeigen Bespiele für längliche Gegenstände mit einer Profilkontur, die von der nachfolgend beschriebenen Vorrichtung bevorzugt gleichgerichtet werden können. Figur 1 zeigt einen Rohling 2 zur Herstellung von Kunststoffbehältern, insbesondere von PET-Flaschen. Dieser weist als Profilkontur einen umlaufenden Kragen 4 auf. Ein an den Kragen einstückig anschliessender Abschnitt ist ein Grundkörper 6, der in einer Blaseinrichtung zum eigentlichen Behälter aufblasbar ist. Selbstverständlich könnte der an die Profilkontur anschliessender Abschnitt 6 auch konisch - statt zylindrisch - ausgebildet sein. Auf der zum Grundkörper 6 in Bezug auf den Kragen 4 entgegengesetzten Seite ist ein Kopfabschnitt 5 für einen Schraubverschluss oder Schnappverschluss angeordnet. Wie in Figur 2 gezeigt, besteht eine Schraube 3 im Wesentlichen aus einem Gewindeteil 8 und einem Schraubenkopf 7 als Profilkontur. Selbstverständlich ist der Anwendungsbereich nicht auf Schlitzschrauben beschränkt.

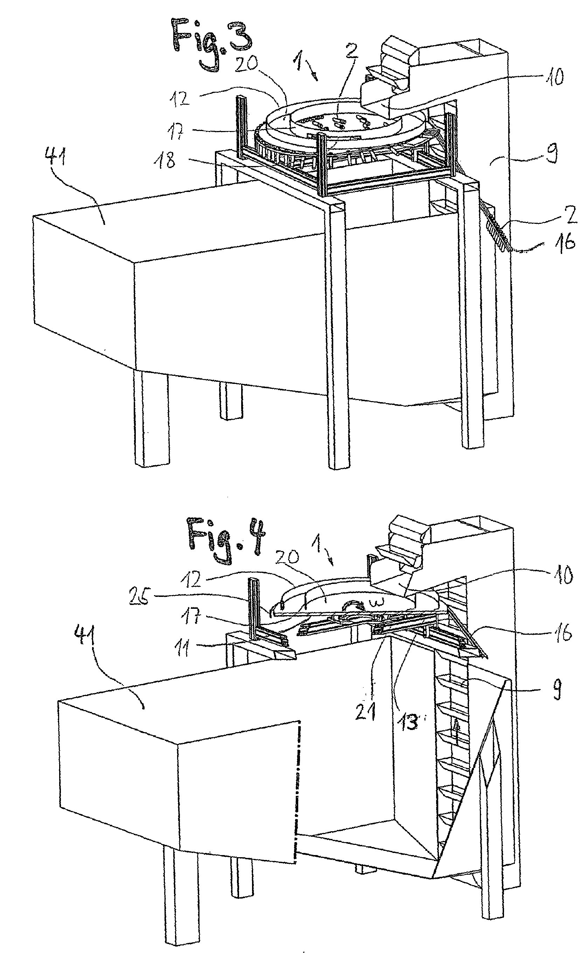

Die Figuren 3 und 4 zeigen eine mit 1 bezeichnete Vorrichtung zum Gleichrichten von Rohlingen 2 gemäss Figur 1. Über eine Zuführeinrichtung 10 werden Rohlinge 2 einem um eine Rotationsachse drehenden Drehtisch 20 aufgegeben. Wegen der Zentrifugalkraft werden die Rohlinge nach aussen bewegt. Über dem Drehtisch 20 ist ein Leitelement 12 sowie ein Zusatzelement 17 angeordnet, die zueinander in Bezug auf die Rotationsachse konzentrisch angeordnet sind. Aus Figur 4 geht hervor, dass zwischen Leitelement 12 bzw. Zusatzelement 17 und dem Drehtisch 20 ein Spalt 13 bzw. 21 gebildet ist. Wie Figur 4 weiter zeigt, enthält der Drehtisch 20 eine kreisförmige Scheibe 11. Die Scheibe 11 ist bevorzugt flach ausgebildet. Es ist aber denkbar, die dem Leitelement zugewandte Scheibenoberseite (im Querschnitt) - statt plan - konvex oder konkav auszugestalten. Die Wirkungsweise der Vorrichtung 1 wird nachfolgend noch im Detail beschrieben.

Randseitig ist die Scheibe 11 durch ein umlaufendes Schienenelement 25 begrenzt, welches zum Aussenumfang des Drehtisches 20 bzw. der Scheibe einen Spalt 26 zur Aufnahme der Rohlinge 2 bildet. An den Spalt 26 (bzw. Schienenelement 25) schliesst ein Spalt 39 (bzw. Schienenelement 15) einer Transportschiene 16 mit zwei in einem Abstand zueinander angeordneten parallelen Schienenelementen 14 und 15 an. Mit Hilfe der Transportschiene 16 können die gleichgerichteten Rohlinge 2 hängend unter Ausnutzung der Gravitationskraft vom Drehtisch 20 wegtransportiert werden. Unterhalb des Drehtisches ist eine Wanne 41 als Vorratsbehälter für die als Schüttgut anfallenden Rohlinge vorgesehen. Von dort werden die Rohlinge mit Hilfe einer Fördereinrichtung, insbesondere eines Stetigförderers 9 zur Zuführeinrichtung 10 gefördert (die Förderrichtung ist mit einem Pfeil angedeutet).

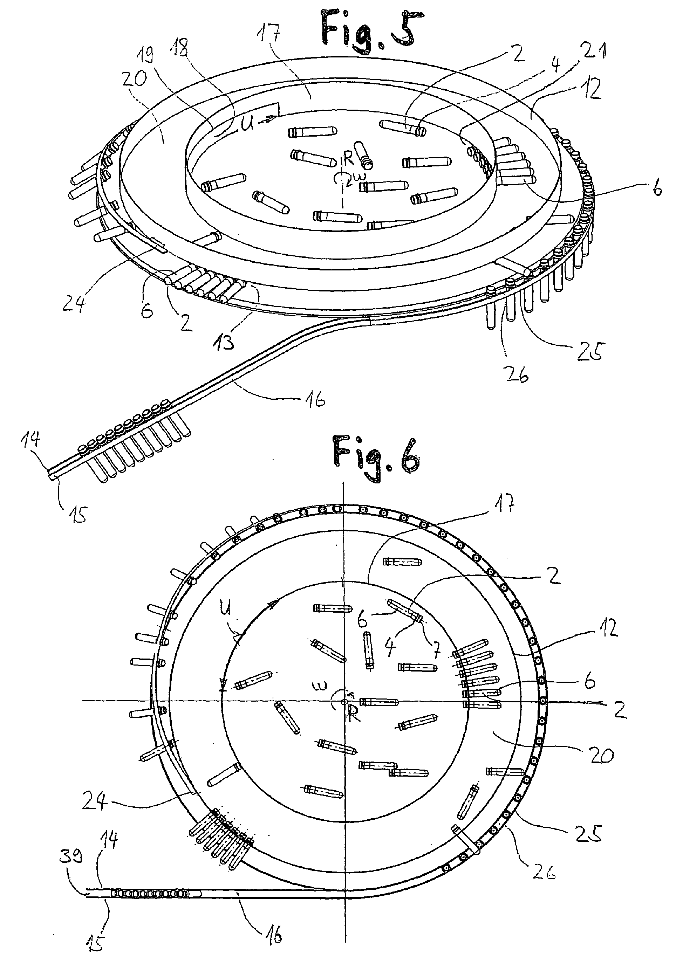

Wie die Figuren 5 und 6 zeigen, ist das Leitelement 12 sowie das Zusatzelement 17 in der Draufsicht kreisförmig ausgestaltet. Dabei umschliessen die beiden Elemente 12 und 17 den gesamten Umfang. Die Elemente 12 und 17 sind in einem Abstand über dem Drehtisch 20 angeordnet, wodurch ein Spalt zum Erfassen der Rohlinge 2 an ihrem Kragen 4 gebildet wird. Die Elemente 12 und 17 sind weiter im rechten Winkel zur Oberseite des Drehtisches 20 angeordnet und verlaufen parallel zur Rotationsachse R. Das Leitelement 12 sowie das Zusatzelement 17 kann als Ring aus einem Metallblech, beispielsweise Stahl gebildet sein. Selbstverständlich können die Elemente 17 und 12 beispielsweise als Leitprofile auch aus einem anderen Material bestehen, beispielsweise aus Kunststoff oder faserverstärkten Materialien. Im Bereich eines Umfangsabschnittes U ist im Zusatzelement 17 eine Aussparung 18 zum Durchführen der Rohlinge 2 radial nach aussen vorgesehen. Dazu soll der Abstand zwischen der Oberfläche des Drehtisches 20 und des Randes 19 der Aussparung 18 grösser als der Durchmesser DK1 (bzw. DK2 bei Schrauben 3) sein. Statt der Aussparung 18 könnte man ein Ringstück 17 vorsehen, welches im Umfangsbereich U unterbrochen ist. Auf ein Zusatzelement 17 könnte je nach Anwendungs- und Einsatzzweck aber auch verzichtet werden.

In einer Übergangsstelle 24 schliesst ein Schienenelement 25 als zweites Leitelement an das als Leitblech ausgestaltete Leitelement 12 an. Das Schienenelement 24 ist ein flaches Profil, beispielsweise ein Blech aus Metall oder ein Profil aus Kunststoff oder ein Faserverbundwerkstoff. In der Übergangsstelle 24 ist das Schienenelement ersichtlicherweise etwa horizontal bzw. parallel zur Oberseite des Drehtisches ausgerichtet. Die Ausrichtung des Schienenelements 25 geht kontinuierlich in eine horizontale Ausrichtung über. Das vertikal ausgerichtete (bzw. achsparallel zur Rotationsachse R verlaufende) Schienenelement 25 umschliesst ersichtlicherweise randseitig wenigstens einen Teil des Umfangs des Drehtisches 20. Am Ende des Schienenelements 25 ist eine Transportschiene 16 angeordnet.

Der Gleichricht-Prozess läuft im Wesentlichen wie folgt ab: ungeordnet anfallende Rohlinge 2 werden etwa mittig im Bereich innerhalb des Zusatzelements 17 auf den mit einer Winkelgeschwindigkeit ω um eine Rotationsachse R rotierenden Drehtisch 20 aufgegeben. Wegen der Zentrifugalkraft bewegen sich die Rohlinge 2 nach aussen, wobei wenigstens ein Teil der Rohlinge 2 derart vom Zusatzelement 17 erfasst werden, dass der Grundkörper 6 der Rohlinge radial nach aussen gerichtet und durch den Spalt durchgeführt ist. Der Kragen 4 sowie der Kopfabschnitt 5 zeigen radial nach innen (vgl. Figur 1). Die derart vom Zusatzelement erfassten Rohlinge 2 bewegen sich dann aufgrund der Drehung des Drehtisches 20 auf einer Kreisbahn entlang des Zusatzelements 17 bis zur Aussparung 18, wo die Rohlinge 2 radial nach aussen in Richtung des Leitelements 12 durchgelassen werden. Eine derartige Vororientierung der Rohlinge 2 kann den Wirkungsgrad der Gleichrichtvorrichtung wesentlich erhöhen. Selbstverständlich kann es vorkommen, dass ein Teil der anfallenden Rohlinge 2 direkt durch die Aussparung 18 durchgeht. Die Rohlinge 2 werden dann mit Hilfe des Spaltes zwischen Leitelement 12 und Drehscheibe 20 vom Leitelement 12 am Kragen 4 erfasst, wobei - analog zum Zusatzelement 17 - der an den Kragen anschliessende Grundkörper 6 radial nach aussen durchgeführt ist. Die Rohlinge 2 bewegen sich auf einer Kreisbahn bis zu einer Übergangsstelle 24 entlang des Leitelements 12, wo die Rohlinge 2 von einem Schienenelement 25 erfasst werden.

Dank des relativ grossen Umfangs des Drehtisches ergibt sich dabei ein langer vorteilhafter Pufferspeicher für die Rohlinge. Die Rohlinge 2 werden nach einer Übergangsphase in hängender Position entlang des Randes des Drehtisches 20 zur Transportschiene 16 geführt. Die Rohlinge 2 ändern also ihre Ausrichtung. Im Bereich der Übergangsstelle 24 sind die Rohlinge 2 noch radial nach aussen gerichtet (die Achsen der Rohlinge verlaufen dabei etwa parallel zur Oberseite), während im Bereich der Transportschiene 16 die Achsen der Rohlinge 2 in hängender Position je nach Neigung der Transportschiene 16 etwa vertikal verlaufen. Der Übergang der Rohlinge vom Leitelement 12 zum Schienenelement 25 kann beispielsweise dadurch ermöglicht werden, dass im Bereich der Übergangsstelle 24 eine entsprechende Ausnehmung im Leitelement 12 vorgesehen ist.

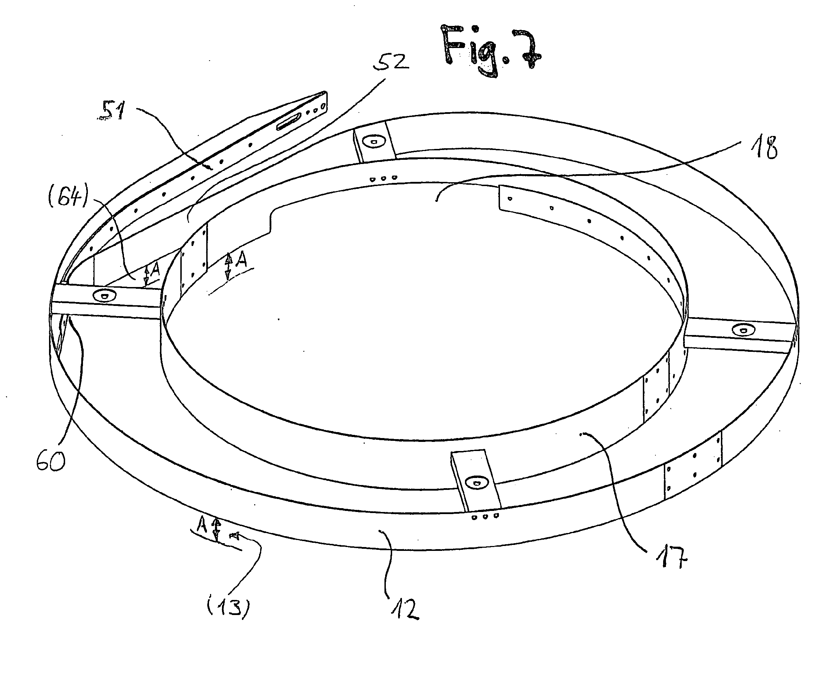

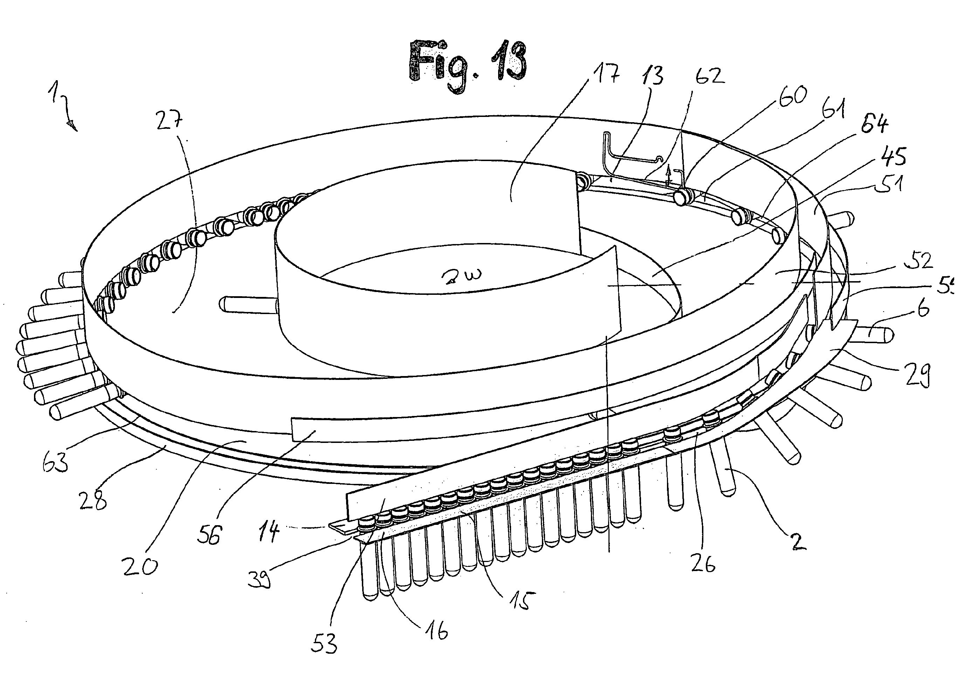

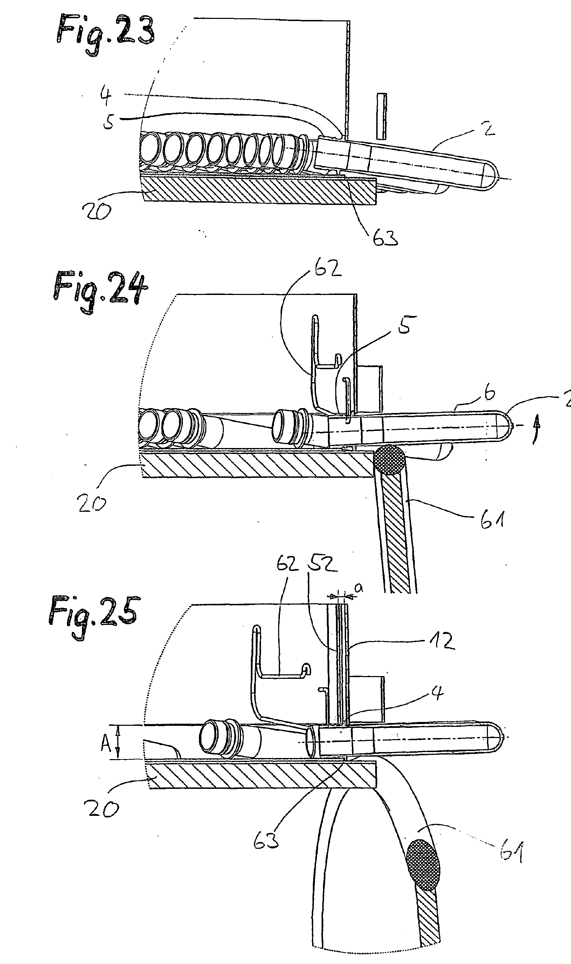

Wie aus Figur 7 hervorgeht, muss das Leitelement 12 in der Draufsicht nicht zwingend einen Kreis bilden. Das Leitelement 12 kann im Bereich der Seite, die der Aussparung 18 zum Durchlassen der Rohlinge zugewandt ist auch abgeflacht sein. Am vorderen Ende der abgeflachten Seite ist ein gekrümmter Leitprofilabschnitt erkennbar, der eine Weichenstelle 60 definiert. An der Weichenstelle 60 können nicht-korrekt erfasste Rohlinge von korrekt erfassten Rohlingen getrennt werden. Dazu ist ein Weichenleitelement 52 vorgesehen, das an der Weichenstelle bezogen auf das Leitelement 12 in einem Abstand (Abstand A, vgl. Fig. 25) nach innen versetzt angeordnet ist. Die genaue Wirkungsweise der Weichenanordnung wird nachfolgend anhand der Figuren 13, 14 sowie 23 bis 25 detailliert beschrieben. Die in Figur 7 gezeigte Konstruktion wird in einem Abstand A über einem (nicht gezeigten) Drehtisch angeordnet, wodurch zwischen den jeweiligen Leitprofilen und der Oberseite des Drehtisches ein Spalt gebildet wird. Der Spalt zwischen Leitelement 12 und dem Drehtisch ist mit (13) und der Spalt zwischen Weichenleitelement 52 und dem Drehtisch ist mit (64) angedeutet. Über einen Abführabschnitt 51 werden die Rohlinge vom Drehtisch abgeführt.

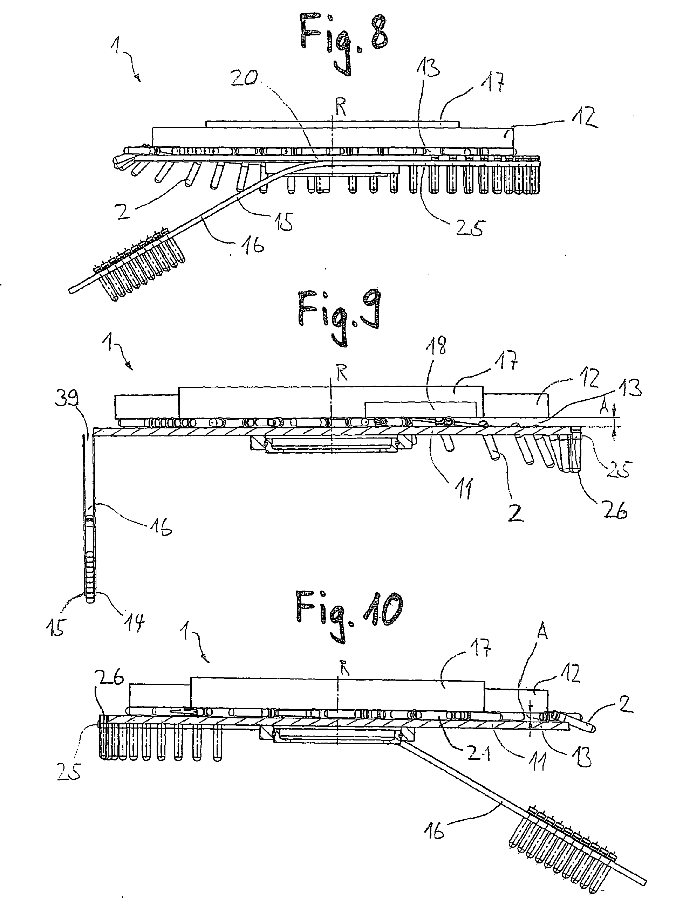

Die Seitenansicht sowie die Querschnittsdarstellungen der Vorrichtung 1 gemäss den Figuren 8 bis 10 zeigen insbesondere nochmals deutlich, dass die Rohlinge 2 im Einwirkbereich des Leitelements 12 (bzw. Zusatzelement 17) radial nach aussen gerichtet sind und in einer zur Oberseite des Drehtisches 20 parallelen Ebene liegen. Im Einwirkbereich des Schienenelements 25 verlaufen die Rohlinge (mit Ausnahme eines Übergangsbereichs) etwa achsparallel zur Rotationsachse R des Drehtisches R. Wie etwa die Figuren 9 und 10 zeigen, sind das Leitelement 12 sowie das Zusatzelement 17 jeweils in einem Abstand A von der diesen Elementen zugewandten Oberseite des Drehtisches angeordnet. Der Abstand A definiert den Spalt, durch welchen der Grundkörper 6 des Rohlings 2 durchführbar ist. Zum Erfassen des Rohlings 2 an seinem Kragen 4 muss deshalb die Abmessung des Spaltes zwischen dem Durchmesser des Grundkörpers D1 und dem Kragendurchmesser DK1 liegen.

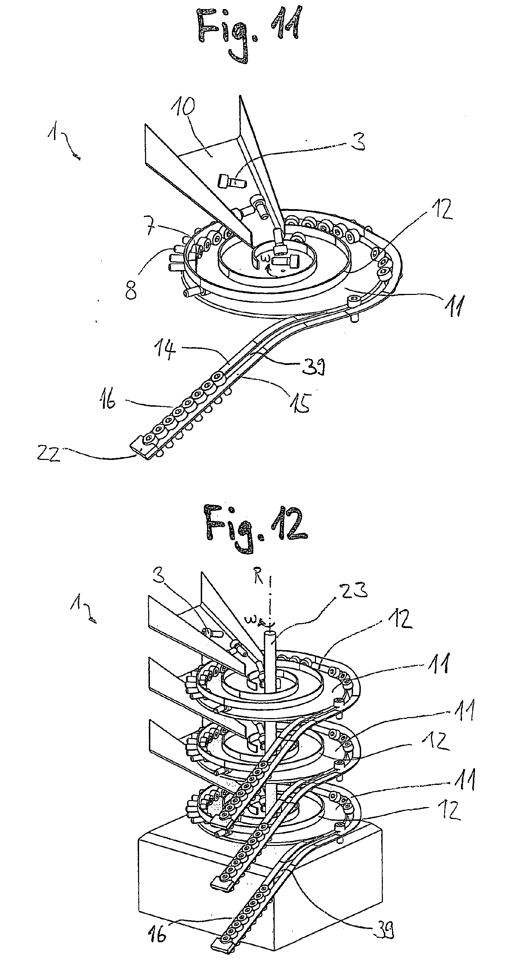

Eine alternative Ausgestaltung eines Leitelements 12 ist in den Figuren 11 und 12 dargestellt. Hier ist das Leitelement 12 in der Draufsicht spiralförmig ausgestaltet. Wie in den vorhergehenden Beispielen ist das spiralförmige Leitelement 12 in einem Abstand vom Drehtisch bzw. von der Scheibe 11 angeordnet und bildet so einen Spalt zum Erfassen der Schrauben 3 an ihrem Schraubenkopf 7, wobei der Gewindeteil 8 der Schraube etwa radial nach aussen durchgeführt ist. Vorteil einer solchen Ausgestaltung ist, dass durch die Spiralform ein verhältnismässig langer Weg geschaffen wird, auf welchem die gleichzurichtenden Gegenstände geordnet werden können. Auf ein Zusatzelement (vgl. Element 17 gemäss vorhergehenden Ausführungsbeispielen) kann folglich verzichtet werden. Selbstverständlich könnten auch hier Rohlinge gemäss Ausführungsbeispiel von Figur 1 anstatt der Schrauben eingesetzt werden. Ersichtlicherweise geht das bandförmige Leitelement 12 in ein Schienenelement 15 einer Transportschiene über, wobei das Band des Leitelements 12 im Wesentlichen vertikal bzw. im rechten Winkel zur Scheibe 11 ausgerichtet ist und dass Schienenelement 15 (bzw. das weitere Schienenelement 14) eine etwa horizontale Ausrichtung aufweist. Am Ende der Transportschiene 16 ist ein Anschlag 22 zum Stauen der Schrauben 3 vorgesehen.

Figur 12 zeigt eine Variante mit mehreren Drehtischen bzw. Scheiben 11 sowie Leitelementen 12. Die koaxial angeordneten Scheiben 11 werden über eine gemeinsame Welle 23 angetrieben. Dabei werden sinnvollerweise je Scheibenetage 11 verschiedene Schraubengrössen/-typen gleichzeitig gleichgerichtet.

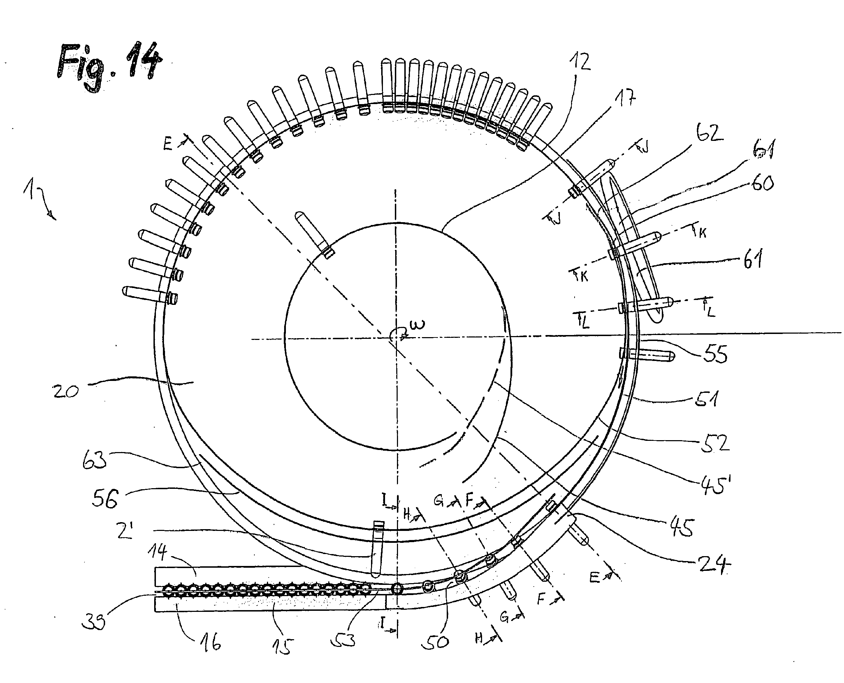

Wie die Figuren 13 und 14 zeigen, besteht die Leitanordnung der Vorrichtung 1 im Wesentlichen aus Leitprofilen. An der Weichenstelle 60 können nicht-korrekt erfasste Rohlinge entlang eines Weichenleitelementes 52 abgeführt werden. Diese Rohlinge können so auf eine weitere Umdrehung rückgeführt werden. Ein solcher Rohling ist in Figur 14 mit 2' gekennzeichnet. Ersichtlicherweise geht das Weichenleitelement 52 unmittelbar in das Leitelement 12 über, wodurch abgeschiedene Rohlinge ihre grundsätzliche radiale Orientierung beibehalten. Ausserdem hat dabei ersichtlicherweise der Spalt 13 am Leitelement und der Spalt 64 am Weichenleitelement die gleiche Höhe. Wie Figur 13 zeigt, kann dazu das Leitelement 12 und das Weichenleitelement 52 durch ein gemeinsames Leitprofil gebildet sein, wobei das eine Ende des Leitprofils die Weichenstelle 60 definiert. Die korrekt erfassten Rohlinge 2 werden durch die Weichenstelle 60 entlang eines Abführabschnitts 51 des Leitelements 52 abgeführt und schliesslich in vertikaler Lage vom Drehtisch über eine Transportschiene 16 weggeführt. Ein Anschlagblech 53 sichert die abgeführten Rohlinge, und verhindert ein vertikales herausstossen aus dem Spalt 39. Ebenso verhindert ein äusserer Grundkörperniederhalter 55 ein unzulässiges Anheben der Grundkörper am Anhebemittel 61. Er erstreckt sich vom Beginn des Anhebemittels 61 bis zum Beginn der Übergangsstelle 24 bzw. des Leitelements 29. Ein innerer Grundkörperniederhalter 56 hat die gleiche Funktion bei den Rohlingen, die nochmals über das Weichenleitelement 52 abgeleitet werden.

Eine Besonderheit der Vorrichtung 1 gemäss Figur 13 und 14 ist, dass das Zusatzelement 17 ein federndes Endstück 45 aufweist, das derart am Zusatzelement 17 gelagert ist, dass das freie Ende unter Einwirkung des Staudrucks von am Endstück geführter Rohlinge bei drehendem Drehteller nach aussen bewegbar ist. Dadurch entsteht eine etwa spiralförmige Konfiguration, die sich vorteilhaft auf die Übergabe der Rohlinge vom Zusatzelement auf das Leitelement auswirkt. Bei Überfüllung des Drehtellers mit Rohlingen, die sich zwischen Leitelement und Zusatzelement befinden, so würden diese einen äusseren Staudruck bewirken. Bei Überfüllung könnte daher das Endstück die Aussparung für den Durchgang der Rohlinge verschliessen. Ein Endstück in Sperrstellung ist mit einer gestrichelten Linie 45' in Figur 14 angedeutet.

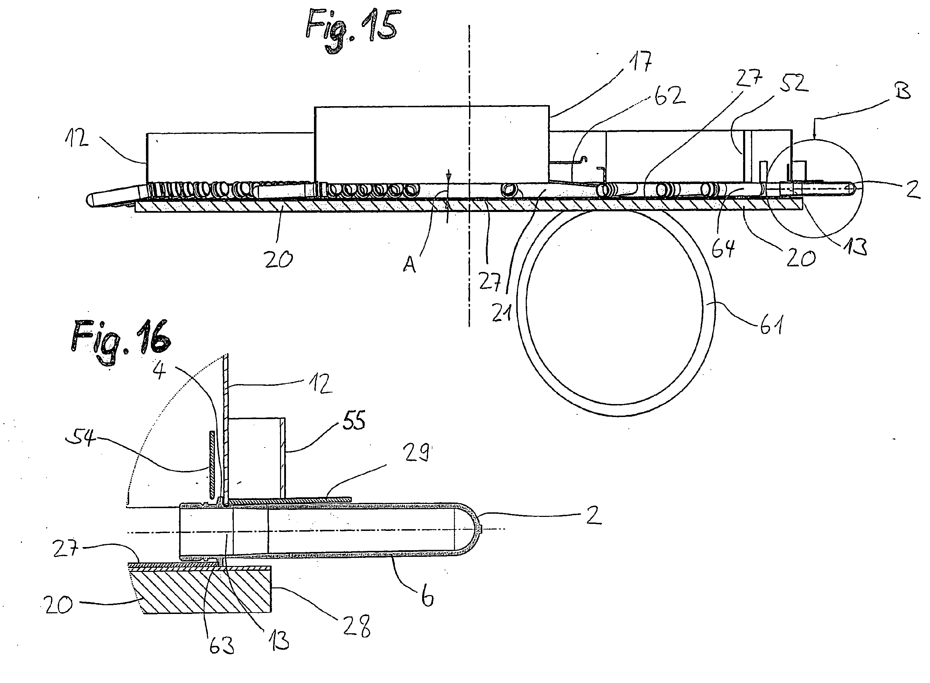

Wie Figur 15 nochmals deutlich zeigt, sind die einzelnen Elemente der Leitanordnung wie etwa das Leitelement 12, das Zusatzelement 17 und das Weichenleitelement 52 jeweils in einem Abstand A von der Oberseite 27 des Drehtisches 20 angeordnet. Wie aus der Detailansicht des Randbereichs des Drehtellers hervorgeht (Figur 16), ist der Rohling 2 zusätzliche zur Führung durch den Abführabschnitt des Leitelements 12 durch eine Führungsschulter 63 gesichert. Diese Führungsschulter kann durch eine Abstufung der Oberseite 27 des Drehtisches 20 oder durch Auflegen einer zweiten Scheibe geschaffen werden. Ersichtlicherweise ist auf diese Weise eine nahezu optimale Führung für den Rohling 2 geschaffen, welcher somit selbständig in waagrechter radialer Lage bewegbar ist.

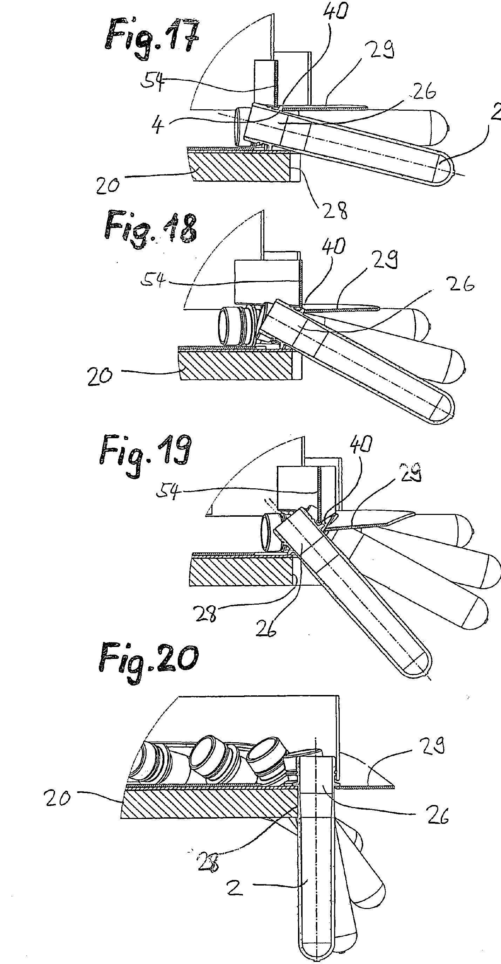

Anhand der Figuren 16 bis 20 wird gezeigt, wie die Rohlinge 2 von einer radialen Lage in eine hängende Lage überführbar sind. Dazu ist ein zweites Leitelement 29 in Kombination mit einem Führungselement 54 vorgesehen, wobei ein Spalt 26 zum Rand des Drehtisches 20 bzw. ein Spalt 40 zwischen dem Leitelement 29 und dem Führungselement 54 gebildet wird. Im Spalt 40 wird der Kragen 4 des Rohlings 2 gehalten und in einer Kurvenbahn nach aussen bzw. nach unten geführt. Figur 20 zeigt dabei einen Rohling 2 in einer senkrecht hängenden Lage. In dieser Position bildet die Stirnseite 28 des Drehtellers 20 eine Abroll- und Anschlagfläche zum Weiterbewegen des Rohlings entlang des Randes.

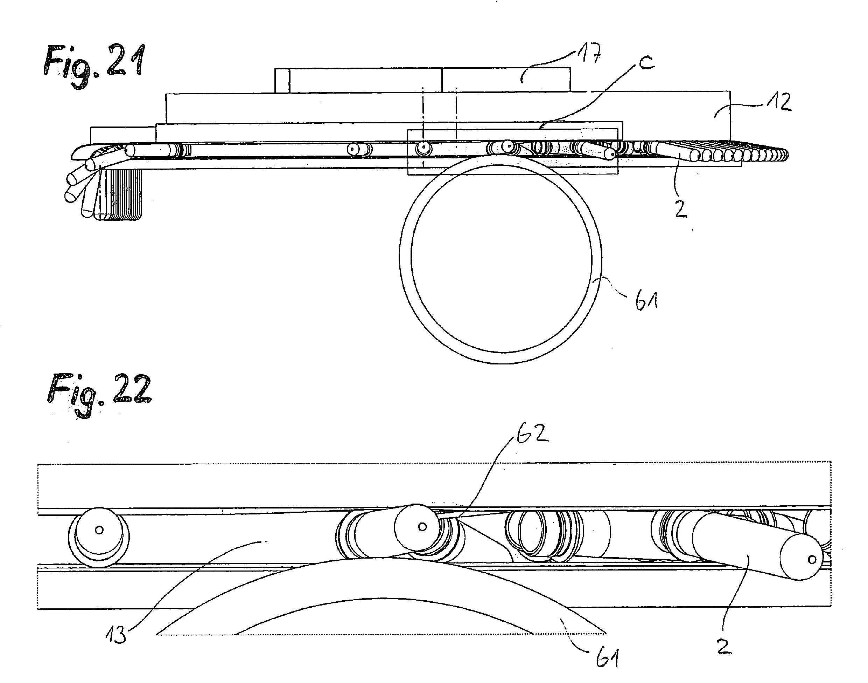

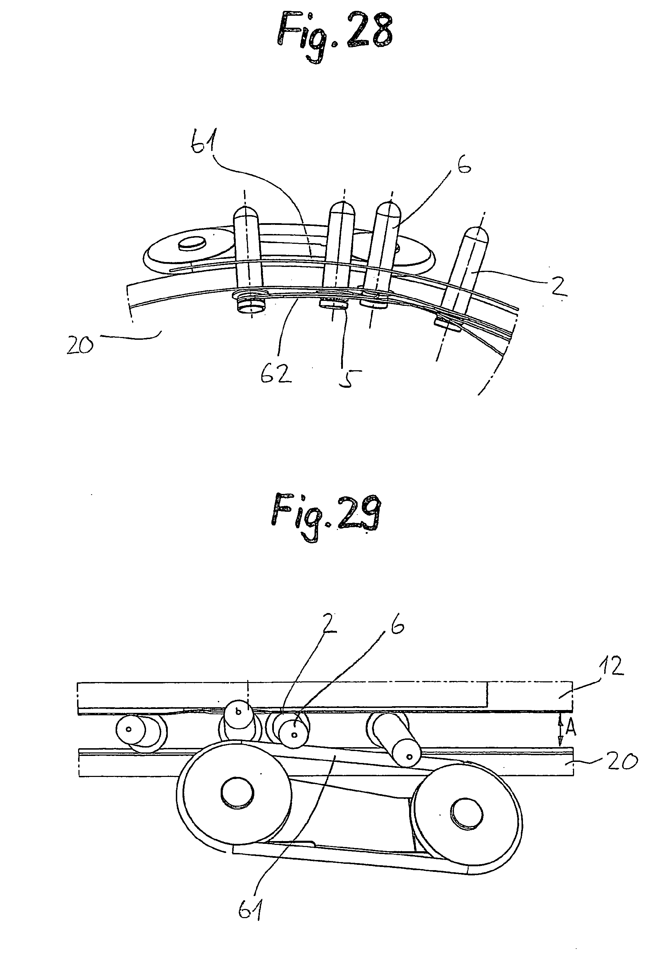

Wie aus den Figuren 21 und 22 hervorgeht, werden die vor der Weichenstelle leicht nach aussen gegen unten geneigten Rohlinge 2 mit Hilfe eines Anhebemittels 61 in eine etwa waagrechte Lage gebracht. Ein solches Anheben soll ein Verkeilen der Rohlinge im Bereich der Weichenstelle verhindern. Figur 23 zeigt deutlich, dass die Rohlinge 2 vor der Weichenstelle leicht gegen aussen nach unten geneigt sind. Diese Schiefstellung zur Horizontalen der Rohlinge ist im Wesentlichen durch den Kragen 4 sowie allenfalls durch teilweise konisch ausgebildete Grundkörper bedingt. Etwa an der Weichenstelle (Figur 24) wird der Grundkörper 6 des Rohlings 2 mit Hilfe des Anhebemittels 61 angehoben. Dies kann durch ein Reibrad geschehen. Dieses Reibrad wirkt ersichtlicherweise derart mit dem Rand des Drehtisches 20 zusammen, dass es automatisch und synchron in Drehbewegung versetzt wird (vgl. gleichartig funktionierendes Anhebemittel gemäss Figuren 28/29). Selbstverständlich wäre aber auch ein Rad mit einem separaten Antrieb vorstellbar. Zusätzlich zum Reibrad 61 ist ein Fang- und Niederhaltemittel 62 vorgesehen sein, das auf den Kopfabschnitt 5 des Rohlings 2 einwirkt, wodurch der Rohling in eine radiale Lage gebracht werden oder die radiale Lage aufrecht erhalten werden kann. Es wäre auch denkbar, nur ein Fang- und Niederhaltemittel 62 (d.h. ohne Anhebemittel) vorzusehen, um mittels einer Kippbewegung den Rohling in die etwa waagrechte Lage zu bringen.

In Figur 25 ist ein korrekt erfasster Rohling 2 erkennbar, dessen Kragen 4 zwischen dem Weichenleitelement 52 und dem Leitelement 12 aufgenommen ist. Der Abstand a zwischen dem Leitelement 12 und dem Weichenleitelement 52 entspricht dabei etwa der zweifachen Kragendicke (bezogen auf die Längsrichtung). Würde der Rohling - wie in Figur 23 - in einer geneigten Lage verbleiben, so wäre ein Verkeilen und damit ein Maschinenstillstand praktisch unvermeidbar.

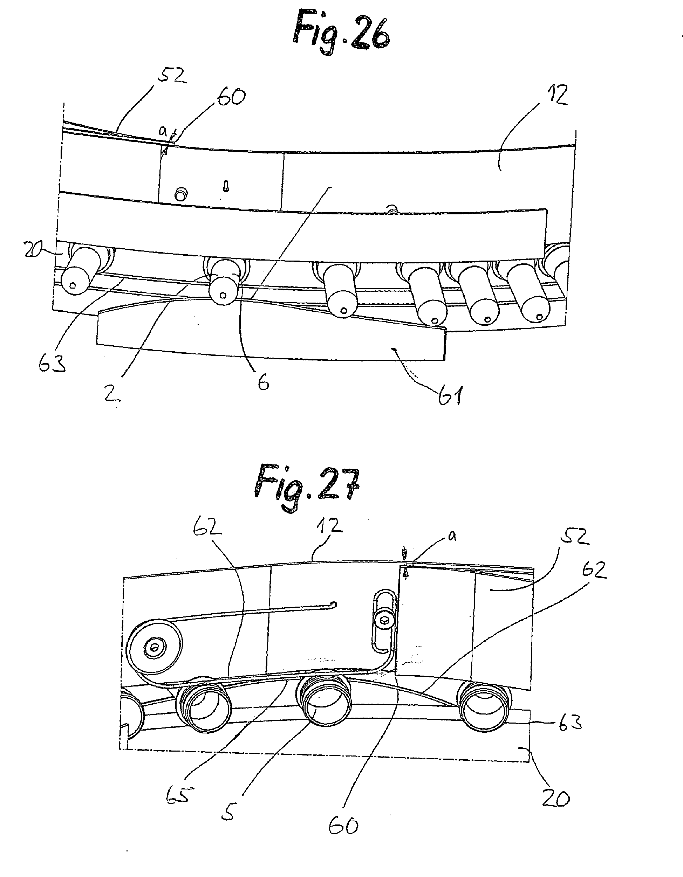

Wie Figur 26 zeigt, kann das Anhebemittel 61 auch durch eine fix installierte Schiene mit einem schrägen Anhebeabschnitt ausgerüstet sein. Die Figuren 28 und 29 zeigen weitere alternative Ausgestaltungen eines Anhebemittels 61. Hier ist das Anhebemittel durch eine bandförmige Anordnung gebildet. Zum Bewegen des Bandes sind die gezeigten Rollen derart angeordnet, dass das Band am Rand des Drehtisches aufliegt. Somit kann das Band durch Reibung automatisch über die Bewegung des Drehtisches mitbewegt werden. Besonders vorteilhaft kann dabei das Band aus einem gummiartigen Material bestehen. Wie Figur 26 weiter zeigt, können die Rohlinge - neben einem zylindrischen Abschnitt - auch einen konischen Grundkörperabschnitt aufweisen, wodurch eine verhältnismässig starke Schiefstellung der Rohlinge sich ausbilden kann. Bei solchen Rohlingen hat sich die Verwendung von Anhebemitteln als besonders vorteilhaft erwiesen.

Figur 27 zeigt eine Detailansicht des Fang- bzw. Niederhalters 62 für den Kopfabschnitt 5 eines Rohlings, der als Federelement ausgebildet ist. Das Federelement weist einen entlang der Innenseite Leitelements 12 verlaufenden Drahtabschnitt 65 auf, der einerseits zum Fangen der Rohlinge am Kragen 4 dient und andererseits den Kopfabschnitt 5 niederhält zum Erzielen oder Aufrechterhalten der radialen Lage der Rohlinge, welche so kontrolliert der Weiche 60 zugeführt werden können. Diese federnde Ausführung des Fang- bzw. Niederhalters 62 passt sich den unterschiedlichen Kragendicken 4 automatisch an. Der Drahtabschnitt 65 kann bezüglich seiner Lage mittels Schrauben am Leitelement fixiert werden.

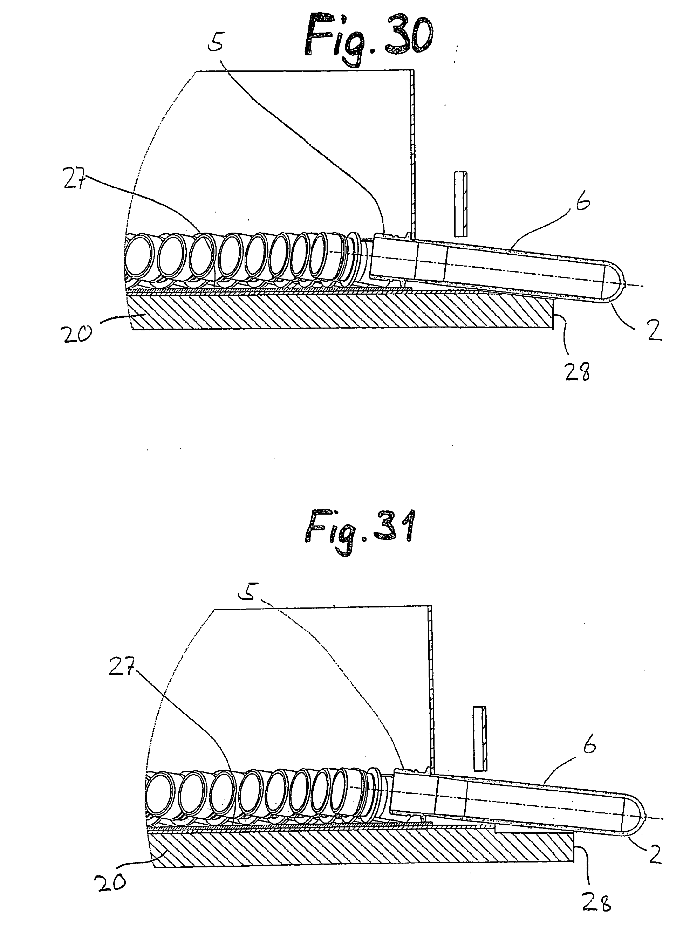

Wie die Figuren 30 und 31 zeigen, kann der Randbereich des Drehtisches 20 abgeschrägt (Figur 30) oder stufenartig ausgebildet sein. Auf diese Weise lässt sich erreichen, dass der Rohling 2 einen engeren Leitblechabstand A zur Scheibe aufweisen kann und somit generell aber insbesondere auch bei einem Rohling mit niedriger Kragenhöhe stabil entlang des Leitelements 12 führbar ist.

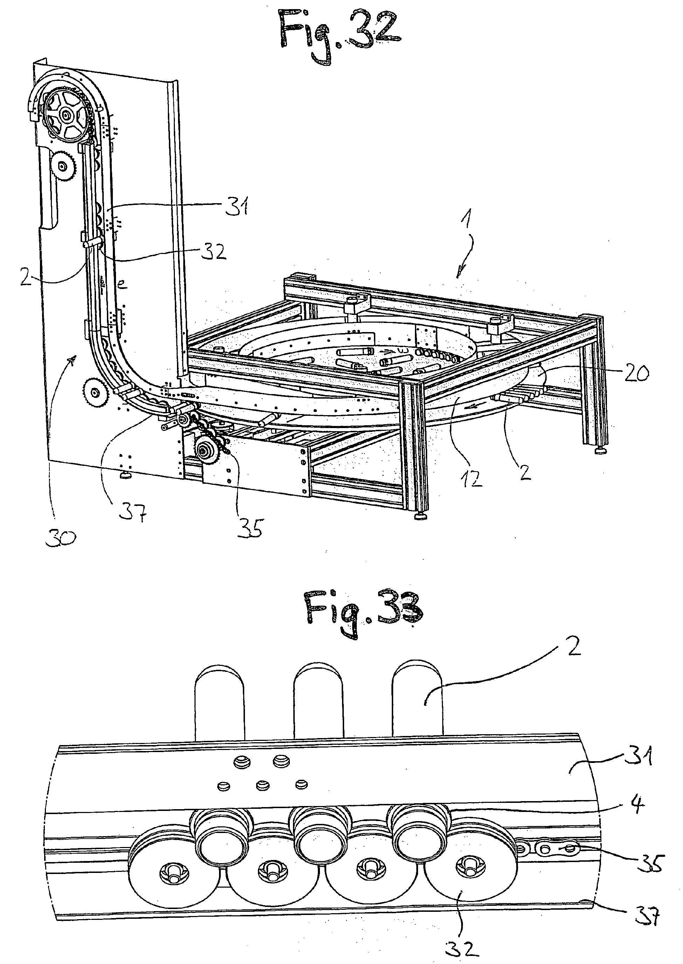

Figur 32 zeigt eine Transportvorrichtung 30, die durch die Vorrichtung 1 gleichgerichteten Rohlinge 2 übernimmt und weiter transportiert und sie beispielsweise einer (nicht gezeigten) Blaseinrichtung zum Herstellen von PET-Flaschen zuführt. Die Transportvorrichtung 30 wird mit Hilfe einer Kette 35 angetrieben, wodurch es insbesondere möglich ist, Rohlinge oder andere Gegenstände insbesondere aufwärts zu bewegen. Die Rohlinge 2 sind während des Transports einerseits zwischen zwei Rollen 32 und einer Führungsschiene 31 positioniert. Wie aus Figur 32 hervorgeht, halten die Rohlinge 2 sowohl während des Gleichricht-Prozesses als auch während dem Transportvorgang mit der Transportvorrichtung 30 ihre horizontale Lage bei. Selbstverständlich könnten die Rohlinge 2 auch in einer anderen Lage transportiert werden, beispielsweise in einer Überkopflage. Diese Transportlage wird oft für die Vorheizstrecke der Rohlinge 2 verlangt.

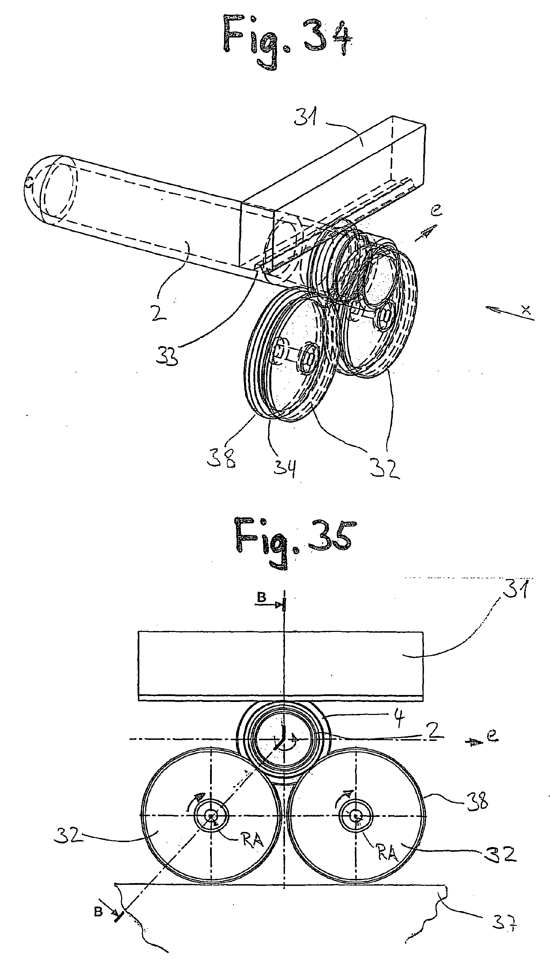

Die Figuren 33 bis 35 zeigen den prinzipiellen Aufbau einer Transportvorrichtung 30. Aus Figur 33 geht hervor, dass die Rohlinge 2 beim Transportvorgang zwischen der feststehenden Führungsschiene 31 und der Transportkette 35 mit der Mehrzahl in einer Reihe angeordneten Rolle 32 positioniert ist. Figur 35 zeigt deutlich, dass durch die Positionierung des Rohlings 2 zwischen der Führungsschiene 31 und den jeweils beiden Rollen 32 eine Drei-Punkte-Lagerung entsteht. In dieser Position verläuft die Achse des Rohlings 2 parallel zu den Rollenachsen RA der Rollen 32 somit kann der Rohling 2 rollend in e-Richtung bewegt werden (die jeweiligen Drehrichtungen sind mit einem Pfeil gekennzeichnet). Die Rollen 32 können ihrerseits entlang einer Rollenführung 37 in e-Richtung geführt sein. Anstatt der Rollen 32 könnte man auch starr mit der Transportkette verbundene Gleitkörper, beispielsweise Gleitmitnehmer vorsehen. Solche Gleitmitnehmer könnten beispielsweise aus Teflon® bestehen oder einen Teflon®-Überzug aufweisen. Wichtig wäre, dass der Kontaktpunkt oder allenfalls die Kontaktfläche zwischen Rohling und Gleitkörper bzw. Gleitmitnehmer möglichst reibungsarm ausgestaltet wäre.

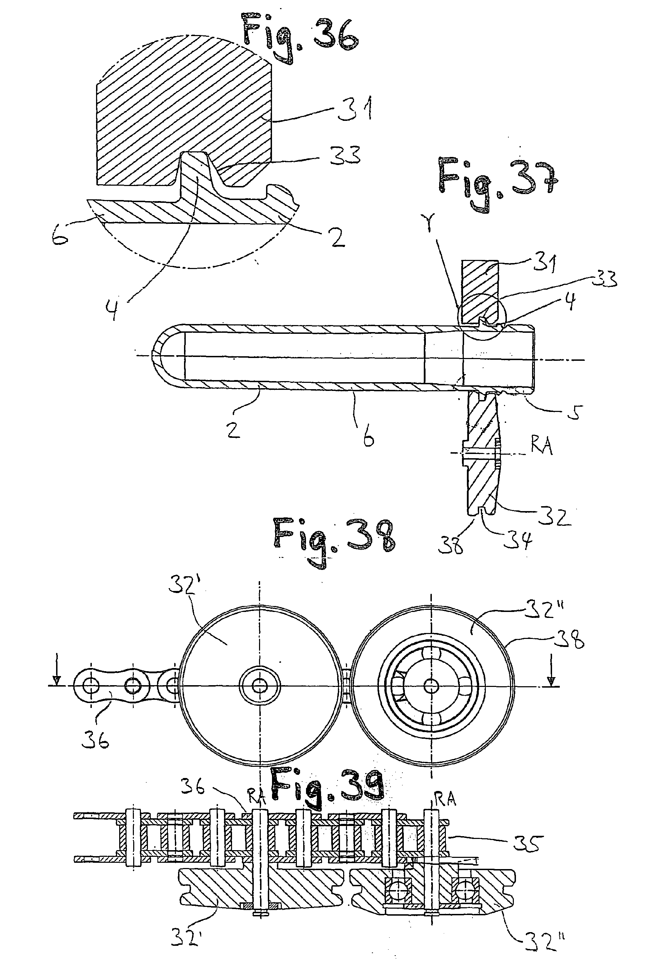

Figur 36 zeigt die Positionierung des Rohlings 2 im Querschnitt in der Transportvorrichtung 30. Der Rohling 2 wird im Bereich seines Kragens 4 auf der einen Seite von der Führungsschiene 31 erfasst. Zur genauen Positionierung und Führung ist eine zum Kragen 4 etwa korrespondierende Führungsnut 33 vorgesehen (vgl. vergrösserte Darstellung gemäss Figur 37). Auf der gegenüberliegenden Seite wird der Rohling 2 von Rollen 32 erfasst, die eine im Rollenumfang 38 umlaufende Nut 34 aufweisen. Somit kann der Kragen 4 des Rohlings 2 (oder eine andere Profilkontur eines länglichen Gegenstandes) auf optimale Weise zum Transport ausgenutzt werden. Er unterliegt keinem Verschleiss und wird auch nicht beschädigt. Ferner steht diese freie Rohlingspartie für diverse Operationen, wie Vorwärmen oder QS-Prüfungen am gesamten Umfang zur Verfügung.

Figur 38 zeigt verschiedene mögliche Varianten von Lagerungen der Rollen: Die Rolle 32' ist mit einem Gleitlager und die Rolle 32" mit Hilfe eines Kugellagers drehbar gelagert. Wie aus Figur 20 hervorgeht befindet sich die Lagerung der Rollen 32' bzw. 32" bevorzugt auf verlängerten Gelenkachsen RA angeordnet, welche jeweils zwei Kettenelemente 36 gelenkig miteinander verbinden.

Selbstverständlich könnte man die Rollen auch starr mit der Kette verbinden. In diesem Fall sollte darauf geachtet werden, dass die Rollen aus einem gleitfähigen Material bestehen. Mit Hilfe solcher Gleitkörper könnte man die Rohlinge in Transportrichtung schieben. Eine Roll- oder Abwälzbewegung der Rohlinge ist also nicht zwingend erforderlich.

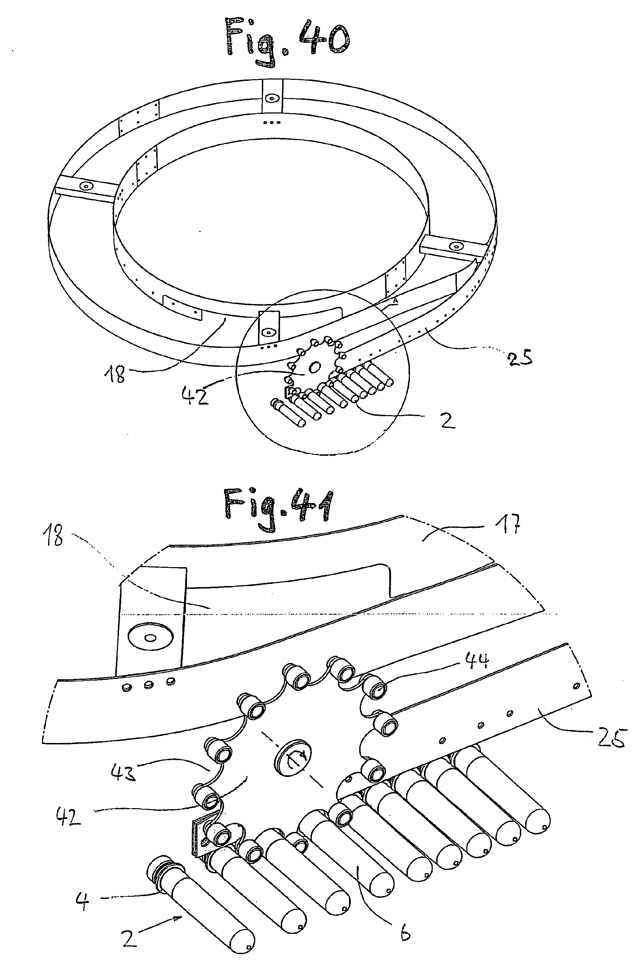

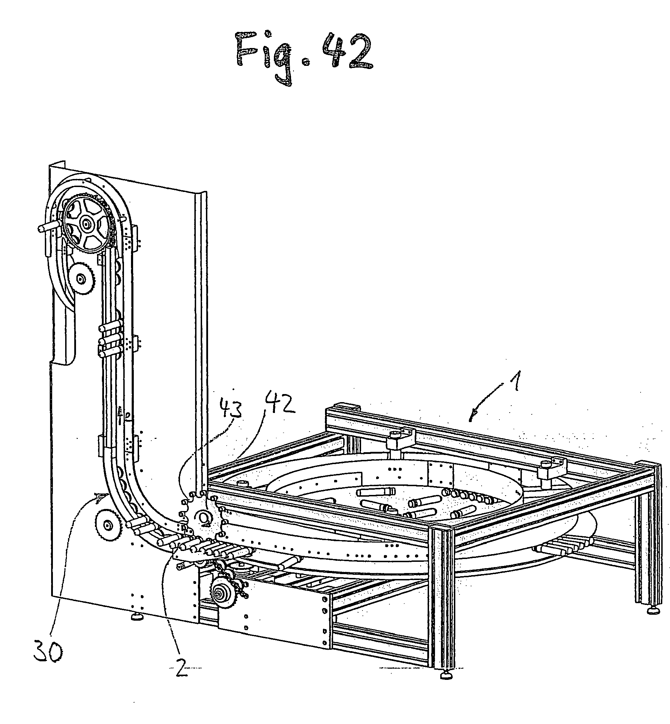

Figur 40 zeigt, dass etwa im Bereich des Endes des Schienenelements 25 oder im Übergangsbereich zur Transportvorrichtung (hier nicht gezeigt, siehe Figur 42) ein Eintaktrad 42 zum geordneten Bereitstellen der Rohlinge für die Transportvorrichtung angeordnet ist. Dieses Eintaktrad 42 weist - wie insbesondere aus Figur 22 hervorgeht - über seinem Umfang verteilte Aussparungen 43 auf. Die Aussparungen 43 korrespondieren zu den Rohlingen 2. Der Durchmesser der kreisförmigen Aussparung entspricht dabei in etwa dem Durchmesser eines Rohlings 2 (hier: Durchmesser von dessen Grundkörper). Das Eintaktrad 42 ist drehbar gelagert (die Rotationsachse ist mit einer entsprechenden Linien gekennzeichnet). Die Aussparungen 43 sind derart auf dem Umfang des Eintaktrads 42 angeordnet, das durch Passieren des Eintaktrads 42 die Rohlinge 2 derart in einem Abstand voneinander positioniert werden, welcher dem Abstand zwischen den Rollen entspricht (vgl. Figur 33). Zur einfachen Handhabung der Rohlinge 2 sind dazu zwischen den Aussparungen 43 Abstandelemente 44 angeordnet. Diese Abstandelemente 44 sind vorliegend als zylindrische Körper ausgestaltet.

Wie aus Figur 42 hervorgeht, dient das Eintaktrad 42 zur geordneten Übergabe der Rohlinge 2 von der Gleichricht-Vorrichtung 1 an die Transportvorrichtung 30. Da die Rohlinge 2 mit Hilfe des Eintaktrads 42 im richtigen Abstand bereitgestellt werden, wird ein Verklemmen der Rohlinge 2 in der Transportvorrichtung 30 verunmöglicht. Selbstverständlich sind auch andere Systeme zur taktweisen Übergabe der Rohlinge auf die Transportvorrichtung vorstellbar.

## Patentansprüche

1. Vorrichtung zum Gleichrichten von Rohlingen (2) zur Herstellung von Kunststoff-Behältern durch Blasformgebung, die einen umlaufenden Kragen (4) als Profilkontur sowie einen sich daran anschliessenden Grundkörper (6) aufweisen, mit einem um eine Rotationsachse (R) drehbaren Drehtisch (20) mit einer Oberseite (27) zur Aufnahme der ungeordneten Rohlinge (2) und einem Leitelement (12), das derart über dem Drehtisch (20) in einem Umfangsbereich angeordnet ist, dass zwischen der Oberseite (27) des Drehtisches (20) und dem Leitelement (12) ein Spalt (13) gebildet ist, wobei der Grundkörper (6) der Rohlinge (2) jeweils radial nach aussen durch den Spalt (13) durchführbar ist und die Rohlinge (2) durch das Leitelement (12) an ihrem Kragen erfassbar und entlang des Leitelements (12) in Drehrichtung bewegbar sind, wobei zum Trennen von vom Leitelement (12) korrekt erfassten Rohlingen (2), die über einen Abführabschnitt (51) des Leitelements (12) vom Drehtisch abführbar sind, von nicht-korrekt erfassten Rohlingen (2') eine Weichenstelle (60) vorgesehen ist, **dadurch gekennzeichnet, dass** an der Weichenstelle (60) ein zum Leitelement (12) nach innen versetztes Weichenleitelement (52) angeordnet ist, das einen Spalt (64) zur Oberseite (27) des Drehtisches (20) definiert, durch welchen die nicht-korrekt erfassten Rohlinge (2') jeweils radial nach aussen durch den Spalt (13) durchführbar und an ihrem Kragen vom Weichenleitelement (52) erfassbar und entlang des Weichenleitelements (52) in Drehrichtung bewegbar sind.

2. Vorrichtung nach Anspruch 1, **dadurch gekennzeichnet, dass** zum Überführen von Rohlingen vom Weichenleitelement auf das Leitelement das Weichenleitelement (52) unmittelbar in das Leitelement (12) übergeht.

3. Vorrichtung nach Anspruch 1 oder 2, **dadurch gekennzeichnet, dass** das Leitelement (12) und das Weichenleitelement (52) durch ein gemeinsames einteiliges oder mehrteiliges Leitprofil gebildet ist, wobei das eine Ende des Leitprofils die Weichenstelle (60) definiert.

4. Vorrichtung nach einem der Ansprüche 1 bis 3, **dadurch gekennzeichnet, dass** zur Bildung einer Abführöffnung für vom Leitelement (12) korrekt erfasste Rohlinge (2) das Leitelement (12) und das Weichenleitelement (52) wenigstens teilweise entlang des Abführabschnitts (51) in einem zum Kragen (4) der Rohlinge (2) korrespondierenden Abstand (a) zueinander angeordnet sind.

5. Vorrichtung nach einem der Ansprüche 1 bis 4, **dadurch gekennzeichnet, dass** auf der Oberseite (27) des Drehtisches (20) durch eine Abstufung eine Führungsschulter (63) vorgesehen ist, die im Bereich der Weichenstelle (60) einen Anschlag für den Kragen (4) der Rohlinge (2) bildet.

6. Vorrichtung nach einem der Ansprüche 1 bis 5, **dadurch gekennzeichnet, dass** im Bereich der Weichenstelle (60) zum Erzielen einer etwa waagrechten Lage der Rohlinge Anhebemittel (61) zum Anheben der Grundkörper (6) und/oder Fang- und Niederhaltemittel (62) zum Fangen und Niederhalten der Kopfabschnitte (5) und/oder zum Ausrichten in die radiale Lage der Rohlinge (2) angeordnet sind.

7. Vorrichtung nach einem der Ansprüche 1 bis 6, **dadurch gekennzeichnet, dass** der Drehtisch (20) durch eine kreisförmige Scheibe gebildet ist, wobei die Oberseite (27) plan ist.

8. Vorrichtung nach einem der Ansprüche 1 bis 7, **dadurch gekennzeichnet, dass** das Leitelement (12) in der Draufsicht wenigstens teilweise etwa kreisförmig ausgestaltet ist.

9. Vorrichtung nach einem der Ansprüche 1 bis 7, **dadurch gekennzeichnet, dass** das Leitelement (12) in der Draufsicht spiralförmig ausgestaltet ist.

10. Vorrichtung nach einem der Ansprüche 1 bis 9, **dadurch gekennzeichnet, dass** das Leitelement (12) den Rand des Drehtisches (20) wenigstens teilweise begrenzt.

11. Vorrichtung nach einem der Ansprüche 1 bis 10, **dadurch gekennzeichnet, dass** das Leitelement (12) ein Leitprofil, insbesondere ein Leitblech ist.

12. Vorrichtung nach einem der Ansprüche 1 bis 11, **dadurch gekennzeichnet, dass** zum Kanalisieren der Rohlinge auf dem Drehtisch wenigstens ein Zusatzelement (17) vorgesehen ist, welches in Bezug auf das Leitelement (12) koaxial nach innen versetzt, insbesondere konzentrisch angeordnet ist, wobei das Zusatzelement (17) in einem Umfangsabschnitt (U) eine Freistellung, insbesondere eine Aussparung (18) zum Durchlassen der Rohlinge radial nach aussen aufweist.

13. Vorrichtung nach Anspruch 12, **dadurch gekennzeichnet, dass** zum Vororientieren der Rohlinge zwischen dem Drehtisch (20) und dem Zusatzelement (17) ein Spalt (21) zum Erfassen der Rohlinge an ihrem Kragen (4) und zum Bewegen der Rohlinge entlang des Zusatzelements (17) vorgesehen ist.

14. Vorrichtung nach einem der Ansprüche 1 bis 13, **dadurch gekennzeichnet, dass** zum Überführen der Rohlinge von der radialen Lage in eine hängende Lage ein zweites Leitelement (25, 29) vorgesehen ist, das einen Spalt (26) zum Rand des Drehtisches (20) bildet.

15. Vorrichtung nach Anspruch 14, **dadurch gekennzeichnet, dass** der Spalt (26) zwischen dem Rand des Drehtisches (20) und dem zweiten Leitelement (25, 29) derart ausgestaltet ist, dass der Grundkörper (6) der Rohlinge in einem entsprechenden Umfangsabschnitt etwa senkrecht durch den Spalt (26) durchführbar ist.

16. Vorrichtung nach einem der Ansprüche 1 bis 15, **dadurch gekennzeichnet, dass** der Rand des Drehtisches (20) zur Bildung einer Abroll- und/oder Anschlagfläche für die Rohlinge in senkrecht hängender Lage durch eine vertikal zur Oberseite verlaufende Stirnseite (28) gebildet ist.

17. Vorrichtung nach einem der Ansprüche 1 bis 16, **dadurch gekennzeichnet, dass** das Leitelement (12) in eine Transportschiene (16) enthaltend zwei in einem Abstand zueinander angeordneten parallelen Schienenelementen (14, 15), die einen Spalt (39) zum hängenden Transportieren der Gegenstände zwischen den Schienenelementen bilden, übergeht, wobei der Spalt (39) zwischen den Schienenelementen (14, 15) sich an den Spalt (13) zwischen Drehtisch (20) und Leitelement (12) anschliesst.

18. Vorrichtung nach Anspruch 17, **dadurch gekennzeichnet, dass** das äussere Schienenelement (15) unmittelbar an das Leitelement (12) anschliesst.

19. Vorrichtung nach einem der Ansprüche 1 bis 16, **dadurch gekennzeichnet, dass** eine antreibbare Transportvorrichtung (30) zum Weitertransport der durch den Drehtisch (20) und das Leitelement (12) gleichgerichteten Rohlinge vorgesehen ist.

20. Verfahren zum Gleichrichten von ungeordnet anfallenden Rohlingen (2) zur Herstellung von Kunststoff-Behältern durch Blasformgebung, die einen umlaufenden Kragen (4) als Profilkontur sowie einen sich daran anschliessenden Grundkörper (6) aufweisen, bei welchem die Rohlinge (2) über eine Zuführeinrichtung (10) etwa mittig auf einen um eine Rotationsachse (R) rotierenden Drehtisch (20) aufgegeben werden und auf dem Drehtisch einer Zentrifugalkraft ausgesetzt werden, wobei die Rohlinge an einem im Umfangsbereich des Drehtisches (20) angeordneten und mit diesem einen Spalt (13) bildenden Leitelement (12) derart am Kragen (4) erfasst werden, dass der Grundkörper (6) radial nach aussen durch den Spalt durchgeführt wird, wobei die korrekt erfassten Rohlinge (2) zum Abführen vom Drehtisch (20) entlang eines Abführabschnittes (51) des Leitelements (12) bewegt werden, **dadurch gekennzeichnet, dass** an einer Weichenstelle (60) mit Hilfe eines zum Leitelement (12) nach innen versetzten Weichenleitelements (52), das einen weiteren Spalt (64) zur Oberseite (27) des Drehtisches (20) für die Rohlinge definiert, die nicht-korrekt erfassten Rohlinge (2') ausgeschieden werden, wobei die ausgeschiedenen Rohlinge (2') in radialer Lage entlang des Weichenleitelements (52) bewegt und wieder dem Leitelement (12) zugeführt werden.

21. Verfahren nach Anspruch 20, **dadurch gekennzeichnet, dass** die Rohlinge durch eine Aussparung (18) eines in Bezug auf das Leitelement (12) nach innen versetzt angeordnetes Zusatzelements (17) hindurch gelassen werden.

22. Verfahren nach Anspruch 21, **dadurch gekennzeichnet, dass** die Rohlinge zum Vororientieren derart durch einen Spalt (21) zwischen Drehtisch (20) und Zusatzelement (17) am Kragen erfasst werden, dass der Grundkörper (6) radial nach aussen durchgeführt wird und die Rohlinge unter Ausnützung der Drehbewegung des Drehtisches (20) vorzugsweise rollend in Drehrichtung des Drehtisches entlang des Zusatzelements (17) bewegt werden.

23. Verfahren nach einem der Ansprüche 20 bis 22, **dadurch gekennzeichnet, dass** die durch den Spalt (13) am Leitelement (12) durchgeführten Rohlinge vor dem Erreichen der Weichenstelle (60) mit einem Fang- und Niederhaltemittel (62) am Kragen gefangen und in geführter und vorzugsweise niedergehaltener Lage der Weichenstelle zugeführt werden.

24. Verfahren nach einem der Ansprüche 20 bis 23, **dadurch gekennzeichnet, dass** die Rohlinge zum Abführen vom Drehtisch im Bereich der Weichenstelle (60) beziehungsweise unmittelbar danach durch Abkippen um den stirnseitigen Rand des Drehtisches von einer horizontalen Lage in eine vertikale Lage überführt werden.

## Claims

1. Device for rectifying blanks (2) used for producing plastic containers through blow molding, comprising a circular collar (4) as profile contour as well as a thereon attached base body (6), having a turntable (20) turnable about a rotational axis (R) with an upper side (27) for receiving the unordered blanks (2) and a guide element (12) which is arranged above the turntable (20) in a peripheral area such that a gap (13) is formed between the upper side (27) of the turntable (20) and the guide element (12), wherein the base body (6) of the blanks (2) can be respectively passed radially outwards through the gap (13) and the blanks (2) can be taken through the guide element (12) at their collar and are movable along the guide element (12) in rotational direction, wherein a switch point (60) is provided for separating blanks (2) correctly gripped through the guide element (12), which can be led away from the turntable by means of a removing section (51) of the guide element (12), from incorrectly collected blanks (2').
**characterized in,**
**that** at the switch point (60) a switch guide element (52) is arranged inwardly offset to the guide element (12), which switch guide element defines a gap (64) towards the upper side (27) of the turntable (20) through which the incorrectly collected blanks (2') can be respectively passed radially outwards and can be taken at their collar through the switch guide element (52) and are movable along the switch guide element (52) in rotational direction.

2. Device according to claim 1, **characterized in that** the switch guide element (52) directly merges into the guide element (12) in order to transfer blanks from the switch guide element to the guide element.

3. Device according to claim 1 or 2, **characterized in that** the guide element (12) and the switch guide element (52) are formed through a common one-piece or multipart guide profile, wherein the one end of the guide profile defines the switch point (60).

4. Device according to one of the claims 1 to 3, **characterized in that** for forming a discharge opening for blanks (2) correctly gripped through the guide element (12) the guide element (12) and the switch guide element (52) are spaced to each other at least partly along the removing section (51) with a corresponding distance (a) to the collar (4) of the blanks (2).

5. Device according to one of the claims 1 to 4, **characterized in that** on the upper side (27) of the turntable (20) a guide shoulder (63) is provided through grading, which forms a stop for the collar (4) of the blanks (2) in the area of the switch point (60).

6. Device according to one of the claims 1 to 5, **characterized in that** in the area of the switch point (60) lifting means (61) for lifting the base bodies (6), in order to obtain an approximately horizontal position of the blanks, and/or a catching- and holding-down means (62) are arranged for catching and holding-down the head portions (5) and/or for aligning the blanks (2) in the radial position.

7. Device according to one of the claims 1 to 6, **characterized in that** the turntable (20) is formed through a circular disk wherein the upper side (27) is planar.

8. Device according to one of the claims 1 to 7, **characterized in that** in plan view the guide element (12) is shaped at least partially approximately circular.

9. Device according to one of the claims 1 to 7, **characterized in that** in plan view the guide element (12) is spirally shaped.

10. Device according to one of the claims 1 to 9, **characterized in that** the guide element (12) at least partially delimitates the edge of the turntable (20).

11. Device according to one of the claims 1 to 10, **characterized in that** the guide element (12) is a guide profile, in particular a guide plate.

12. Device according to one of the claims 1 to 11, **characterized in that** at least one additional element (17) is provided for canalizing the blanks on the turntable which is arranged coaxially inwardly offset, in particular concentric with respect to the guide element (12), wherein the additional element (12) comprises an exemption, in particular a recess (18), in a peripheral portion (U) to let pass the blanks radially outwards.

13. Device according to claim 12, **characterized in that** for pre-orienting the blanks between the turntable (20) and the additional element (17) a gap (21) is provided for gripping the blanks on their collar (4) and for moving the blanks along the additional element (17).

14. Device according to one of the claims 1 to 13, **characterized in that** a second guide element (25, 29), which forms a gap (26) towards the edge of the turntable (20), is provided for transferring the blanks from the radial position into a hanging position.

15. Device according to claim 14, **characterized in that** the gap (26) between the edge of the turntable (20) and the second guide element (25, 29) is formed such that the base body (6) of the blanks can be passed approximately perpendicular through the gap (26) in a corresponding peripheral section.

16. Device according to one of the claims 1 to 15, **characterized in that** for forming of an unroll- and/or stop surface for the blanks in a perpendicular hanging position the edge of the turntable (20) is formed through a front side (28) running vertical to the upper side.

17. Device according to one of the claims 1 to 16, **characterized in that** the guide element (12) merges into a transport rail (16) comprising two spaced to each other, parallel rail elements (14, 15) forming a gap (39) for suspended transporting the objects between the rail elements, wherein the gap (39) between the rail elements (14, 15) is attached to the gap (13) between the turntable (20) and the guide element (12).

18. Device according to claim 17, **characterized in that** the outer rail element (15) directly attached to the guide element (12).

19. Device according to one of the claims 1 to 16, **characterized in that** a drivable transportation device (30) is provided for further transporting the blanks rectified through the turntable (20) and the guide element (12).

20. Method for rectifying unordered occurring blanks (2) for producing plastic containers through blow molding, comprising a circular collar (4) as profile contour as well as a base body (6) connected thereto, at which the blanks (2) are given in by a feeding means (10) approximately centrally on a turntable (20) rotating around a rotational axis (R) and are exposed to a centrifugal force on the turntable, wherein the blanks are taken on their collar (4) through a guide element (12) arranged in the peripheral area of the turntable (20) and forming a gap (13) with it, such that the base body (6) is passed radially outwards through the gap, wherein the correctly gripped blanks (2) are moved along a discharge portion (51) of the guide element (12) for discharging from the turntable (20), **characterized in that** at a switch point (60) the incorrectly taken blanks (2') are rejected with the help of a switch guide element (52) arranged inwardly offset to the guide element (12), defining a further gap (64) towards the upper side (27) of the turntable (20) for the blanks, wherein the rejected blanks (2') are moved in radial position along the switch guide element (52) and are re-fed to the guide element (12).

21. Method according to claim 20, **characterized in that** the blanks are passed through a recess (18) of an additional element (17) arranged inwardly offset with respect to the guide element (12).

22. Method according to claim 21, **characterized in that** the blanks are gripped through a gap (21) between turntable (20) and additional element (17) at the collar for pre-orientating such that the base body (6) is passed radially outwards and the blanks are moved, preferably by rolling in rotational direction of the turntable along the additional element (17) by utilizing the rotational movement of the turntable (20).

23. The turntable according to one of the claims 20 to 22, **characterized in that** the blanks passed through the gap (13) at the guide element (12) are catched at the collar with a catching- and holding-down means (62) before reaching the switch point (60) and are fed to the switch point in a guided and preferably held-down position.

24. Method according to one of the claims 20 to 23, **characterized in that** for being discharged from the turntable in the area of the switch point (60) and directly thereafter, respectively, the blanks are transferred from a horizontal position into a vertical position by being tilted around the frontal edge of the turntable.

## Revendications

1. Dispositif pour redresser des ébauches (2) destinées à la fabrication de réservoirs en plastique par soufflage sur matrice qui présentent une collerette continue (4) comme contour profilé ainsi qu'un corps de base (6) qui vient s'y raccorder, avec un plateau rotatif (20) rotatif autour d'un axe de rotation (R) avec une face supérieure (27) destinée à recevoir les ébauches non ordonnées (2) et un élément de guidage (12) qui est disposé au-dessus du plateau rotatif (20) dans une zone périphérique de sorte qu'entre la face supérieure (27) du plateau rotatif (20) et l'élément de guidage (12) soit formé un interstice (13), le corps de base (6) de chacune des ébauches (2) pouvant être passé radialement vers l'extérieur à travers l'interstice (13) et les ébauches (2) pouvant être saisies à leur collerette par l'élément de guidage (12) et pouvant être déplacées dans le sens de rotation le long de l'élément de guidage (12), pour la séparation d'ébauches (2) saisies correctement par l'élément de guidage (12), qui peuvent être évacuées du plateau rotatif via un segment d'évacuation (51) de l'élément de guidage (12), d'ébauches (2') non saisies correctement étant prévu un point d'aiguillage (60), **caractérisé par le fait qu'**au point d'aiguillage (60) est disposé un élément d'aiguillage (52), décalé vers l'intérieur par rapport à l'élément de guidage (12), qui définit un interstice (64) par rapport à la face supérieure (27) du plateau rotatif (20) à travers lequel chacune des ébauches non saisies correctement (2') peut être passée radialement vers l'extérieur à travers l'interstice (13) et saisie à sa collerette par l'élément d'aiguillage (52) et déplacée dans le sens de rotation le long de l'élément d'aiguillage (52).

2. Dispositif selon la revendication 1, **caractérisé par le fait que**, pour le transfert d'ébauches de l'élément d'aiguillage à l'élément de guidage, l'élément d'aiguillage (52) passe directement à l'élément de guidage (12).

3. Dispositif selon la revendication 1 ou 2, **caractérisé par le fait que** l'élément de guidage (12) et l'élément d'aiguillage (52) sont formés par un profilé de guidage commun d'une seule pièce ou en plusieurs pièces, l'une des extrémités du profilé de guidage définissant le point d'aiguillage (60).

4. Dispositif selon l'une des revendications 1 à 3, **caractérisé par le fait que**, pour former une ouverture d'évacuation d'ébauches (2) correctement saisies par l'élément de guidage (12), l'élément de guidage (12) et l'élément d'aiguillage (52) sont disposés au moins partiellement le long du segment d'évacuation (51) à une distance (a) entre eux correspondant à la collerette (4) des ébauches (2).

5. Dispositif selon l'une des revendications 1 à 4, **caractérisé par le fait que** sur la face supérieure (27) du plateau rotatif (20) est prévu, par un échelonnement, un épaulement de guidage (63) qui constitue, à l'endroit du point d'aiguillage (60), une butée pour la collerette (4) des ébauches (2).

6. Dispositif selon l'une des revendications 1 à 5, **caractérisé par le fait qu'**à l'endroit du point d'aiguillage (60) sont disposés, pour obtenir une position environ horizontale des ébauches, des moyens de levage (61) destinés à lever le corps de base (6) et/ou des moyens de capture et de maintien abaissé (62) destinés à capturer et à maintenir abaissés les segments de tête (5) et/ou à aligner les ébauches (2) en position radiale (2).

7. Dispositif selon l'une des revendications 1 à 6, **caractérisé par le fait que** le plateau rotatif (20) est constitué par un disque circulaire, la face supérieure (27) étant plane.

8. Dispositif selon l'une des revendications 1 à 7, **caractérisé par le fait que** l'élément de guidage (12) est réalisé, en vue de dessus, au moins partiellement environ circulaire.

9. Dispositif selon l'une des revendications 1 à 7, **caractérisé par le fait que** l'élément de guidage (12) est réalisé, en vue de dessus, de forme hélicoïdale.

10. Dispositif selon l'une des revendications 1 à 9, **caractérisé par le fait que** l'élément de guidage (12) délimite au moins partiellement le bord du plateau rotatif (20).

11. Dispositif selon l'une des revendications 1 à 10, **caractérisé par le fait que** l'élément de guidage (12) est un profilé de guidage, en particulier une tôle de guidage.

12. Dispositif selon l'une des revendications 1 à 11, **caractérisé par le fait qu'**il est prévu, pour canaliser les ébauches sur le plateau rotatif, au moins un élément additionnel (17) qui est, par rapport à l'élément de guidage (12), disposé décalé coaxialement vers l'intérieur, en particulier concentriquement, l'élément additionnel (17) présentant dans un segment périphérique (U) un espace libre, en particulier un évidement (18), destiné au passage des ébauches radialement vers l'extérieur.

13. Dispositif selon la revendication 12, **caractérisé par le fait que**, pour préorienter les ébauches, il est prévu, entre le plateau rotatif (20) et l'élément additionnel (17), un interstice (21) destiné à saisir les ébauches par leur collerette (4) et à déplacer les ébauches le long de l'élément additionnel (17).

14. Dispositif selon l'une des revendications 1 à 13, **caractérisé par le fait que**, pour transférer les ébauches de la position radiale à une position suspendue, il est prévu un deuxième élément de guidage (25, 29) qui forme un interstice (26) par rapport au bord du plateau rotatif (20).

15. Dispositif selon la revendication 14, **caractérisé par le fait que** l'interstice (26) entre le bord du plateau rotatif (20) et le deuxième élément de guidage (25, 29) est réalisé de sorte que le corps de base (6) des ébauches puisse, dans un segment périphérique correspondant, être passé environ verticalement à travers l'interstice (26).

16. Dispositif selon l'une des revendications 1 à 15, **caractérisé par le fait que** le bord du plateau rotatif (20) est constitué, pour former une surface de défilement et/ou de butée des ébauches en position suspendue verticalement, par une face frontale (28) s'étendant verticalement à la face supérieure.

17. Dispositif selon l'une des revendications 1 à 16, **caractérisé par le fait que** l'élément de guidage (12) passe en un rail de transport (16) contenant deux éléments de rail (14, 15) parallèles, disposés à une distance l'un de l'autre, qui forment un interstice (39) pour le transport suspendu des objets entre les éléments de rail, l'interstice (39) entre les éléments de rail (14, 15) venant se raccorder à l'interstice (13) entre le plateau rotatif (20) et l'élément de guidage (12).

18. Dispositif selon la revendication 17, **caractérisé par le fait que** l'élément de rail extérieur (15) vient se raccorder immédiatement à l'élément de guidage (12).

19. Dispositif selon l'une des revendications 1 à 16, **caractérisé par le fait qu'**il est prévu un dispositif de transport entraînable (30) pour l'acheminement des ébauches redressées par le plateau rotatif (20) et l'élément de guidage (12).

20. Procédé pour redresser des ébauches (2) se présentant non ordonnées et destinées à la fabrication de réservoirs en plastique par soufflage sur matrice qui présentent une collerette continue (4) comme contour profilé ainsi qu'un corps de base (6) qui vient s'y raccorder, dans lequel les ébauches (2) sont amenées par l'intermédiaire d'un dispositif d'alimentation (10) environ au centre sur un plateau rotatif (20) tournant autour d'un axe de rotation (R) et sont soumises sur le plateau rotatif à une force centrifuge, les ébauches étant saisies par la collerette (4) à un élément de guidage (12) disposé dans la zone périphérique du plateau rotatif (20) et formant avec ce dernier un interstice (13), de sorte que le corps de base (6) soit guidé radialement vers l'extérieur à travers l'interstice, les ébauches saisies correctement (2) étant déplacées, pour l'évacuation du plateau rotatif (20), le long d'un segment d'évacuation (51) de l'élément de guidage (12), **caractérisé par le fait qu'**à un point d'aiguillage (60) sont séparés, au moyen d'un élément d'aiguillage (52), décalé vers l'intérieur par rapport à l'élément de guidage (12), qui définit un autre interstice (64) par rapport à la face supérieure (27) du plateau rotatif (20) pour les ébauches, les ébauches non saisies correctement (2'), les ébauches séparées (2') étant déplacées en position radiale long de l'élément d'aiguillage (52) et à nouveau alimentées vers l'élément de guidage (12).

21. Procédé selon la revendication 20, **caractérisé par le fait que** les ébauches peuvent passer à travers un évidement (18) d'un élément additionnel (17) disposé décalé vers l'intérieur par rapport à l'élément de guidage (12).

22. Procédé selon la revendication 21, **caractérisé par le fait que** les ébauches sont, pour la préorientation, saisis à la collerette à travers un interstice (21) entre le plateau rotatif (20) et l'élément additionnel (17) de sorte que le corps de base (6) soit passé radialement vers l'extérieur et que les ébauches soient déplacées, à l'aide du mouvement de rotation du plateau rotatif (20), de préférence en roulant, dans le sens de rotation du plateau rotatif le long de l'élément additionnel (17).

23. Procédé selon l'une des revendications 20 à 22, **caractérisé par le fait que** les ébauches passées à travers l'interstice (13) à l'élément de guidage (12) sont, avant d'atteindre le point d'aiguillage (60), saisies à la collerette par un moyen de capture et de maintien abaissé (62) et sont amenées en position guidée et, de préférence, maintenue abaissée vers le point d'aiguillage.

24. Procédé selon l'une des revendications 20 à 23, **caractérisé par le fait que** les ébauches sont, pour l'évacuation du plateau rotatif à l'endroit du point d'aiguillage (60), respectivement immédiatement après celui-ci, passées par culbutement autour du bord frontal du plateau rotatif d'une position horizontale en une position verticale.
